# EUROPEAN PATENT APPLICATION

(11) **EP 2 985 654 A1**
(43) Date of publication of application: **17.02.2016**
(21) Application number: 15188077.0
(22) Date of filing: 07.12.2011
(51) Int. Cl.: G02F 1/1335, G02F 1/1333, G02F 1/1337, G02F 1/1362, G02F 1/1343, G02F 1/139

(54) **COLOR FILTER SUBSTRATE FOR OBLIQUE ELECTRIC FIELD LIQUID CRYSTAL DISPLAY DEVICES, AND A LIQUID CRYSTAL DISPLAY DEVICE**

(30) Priority: 16.12.2010 JP 2010280285
(62) Divisional of application: 11849013.5
(71) Applicant: Toppan Printing Co., Ltd., Taito-ku, Tokyo 110-0016 (JP)
(72) Inventor: SAKAMOTO, Taro, Taito-ku, Tokyo 110-0016 (JP); FUKUYOSHI, Kenzo, Taito-ku, Tokyo 110-0016 (JP); ONAKA, Nozomi, Taito-ku, Tokyo 110-0016 (JP)
(74) Representative: TBK

(57) **Abstract**

A color filter substrate for an oblique electric field liquid crystal display device which is capable of a normal display executing a gradation display, a bright dynamic display, a transmission display, and a reflection display, is disclosed. The color filter substrate includes, a transparent substrate, a transparent conducive film that is formed above the transparent substrate, a black matrix that is formed above the transparent substrate and includes openings having a polygonal shape in which opposite sides are parallel to each other, a second transparent resin layer that is formed at a center of the opening having the black matrix, a color layer that is formed above the transparent conducive film, and a first transparent resin layer that is formed above the color layer.

## Description

### Technical Field

The present invention relates to a color filter substrate for a liquid crystal display device, and a liquid crystal display device equipped with the same. Particularly, the present invention relates to a color filter substrate which is optimal for driving of liquid crystals by means of an oblique electric field that is generated when a voltage is applied between a third electrode, which is a transparent conductive film including a color filter substrate, and first and second electrodes including an array substrate side, and a liquid crystal display device equipped with this color filter substrate.

### Background Art

In recent years, there has been a demand for a further enhancement of image quality, price reduction, and electric power saving of a thin display device such as a liquid crystal display device. In regard to a color filter for a liquid crystal display device, there is a demand for sufficient color purity, high contrast, flatness and the like, suited to a display with higher image quality.

In regard to a liquid crystal display with high image quality, an alignment mode of liquid crystals or a liquid crystal driving system such as VA (Vertically Alignment), HAN (Hybrid-Aligned Nematic), TN (Twisted Nematic), OCB (Optically Compensated Bend), or CPA (Continuous Pinwheel Alignment) has been suggested, and thereby, a display with wide viewing angle and high-speed response has been put to practical use.

In a liquid crystal display device of the VA mode in which liquid crystal molecules are aligned in parallel to a plane of a substrate formed of glass or the like, and it is easy to cope with high speed response at a high viewing angle; the HAN mode which is effective for a wide viewing angle; or the like, higher level of flatness (uniformity of a film thickness, or reduction of surface asperities at a color filter surface) and an electrical characteristic such as a dielectric constant are required for a color filter. In such a high image quality liquid crystal display, due to a decrease in coloration upon viewing in an oblique direction, a technology for making a liquid crystal cell thickness (thickness of a liquid crystal layer) small are considered as an important object. Regarding such a technology, in the VA mode, a development of various improved modes such as a MVA (Multi-Domain Vertically Alignment), PVA (Patterned Vertically Alignment), VAECB (Vertically Alignment Electrically Controlled Birefringence), VAHAN (Vertical Alignment Hybrid-Aligned Nematic) and VATN (Vertically Alignment Twisted Nematic) is underway.

Furthermore, in a liquid crystal display device of a longitudinal electric field mode in which a driving voltage is applied in a thickness direction of liquid crystals, such as the VA mode, higher speed response of liquid crystals, a wider viewing angle, and a higher transmittance have been considered as important object. The MVA technology is a technology for securing a wide viewing angle, in order to solve a problem of unstable vertical alignment of liquid crystal molecules at the time of an application of a voltage for driving liquid crystals (problem that a direction in which the liquid crystals that are initially aligned vertically to the substrate surface would tilt at a time of a voltage application, is not easily determined), by providing plural structures for liquid crystal alignment regulation called ribs or slits, and forming liquid crystal domains between these ribs while forming domains with plural directions of alignment at the same time. Japanese Patent No. 2947350 discloses a technology of forming liquid crystal domains by using first and second alignment regulating structures (ribs).

When the liquid crystals exhibit negative dielectric constant anisotropy, specifically, liquid crystal molecules located between two plastic ribs that are formed above a color filter or the like, tend to tilt in a direction, for example, perpendicular to these ribs in a planar view and to align in parallel to a substrate plane, when a driving voltage is applied. However, the liquid crystal molecules at a center of these two ribs do not have the direction of tilt definitively determined despite the voltage application, and may adopt a splay alignment or a bend alignment. Such an alignment disorder of liquid crystals has led to a rough texture in the liquid crystal display or display unevenness. Furthermore, in the case of the MVA mode, in addition to the problems described above, it has been difficult to finely control the amount of tilt of the liquid crystal molecules by means of the driving voltage, and there has been difficulty in achieving a half-tone display.

In order to solve such problems, a technology of using a transparent conductive film (a transparent electrode, a display electrode, or a third electrode) of the color filter substrate side and first and second electrodes of the array substrate side, and controlling liquid crystals in a vertical alignment by means of an oblique electric field that is generated when a voltage is applied to these electrodes, has been disclosed in Japanese Patent No. 2859093 and Japanese Patent No. 4459338. In Japanese Patent No. 2859093, liquid crystals exhibiting negative dielectric constant anisotropy are used, and in Japanese Patent No. 4459338, liquid crystals exhibiting positive dielectric anisotropy are described.

The technique of controlling the liquid crystal alignment by the oblique electric field by using first, second and third electrodes as disclosed in Japanese Patent No. 2859093 or Japanese Patent No. 4459338, is very effective. The oblique electric field allows the direction of tilt of the liquid crystals to be decided. Also, it is easy to control the amount of tilt of the liquid crystals by the oblique electric field, and a significant effect is obtained in a half-tone display.

However, even in these technologies, a measure for disclination of the liquid crystals is insufficient. Disclination is a problem that regions with different light transmittances occur in a pixel (a pixel is a minimum unit of liquid crystal display, and in the present specification, the pixel has the same meaning as a rectangular pixel as indicated) due to unintended alignment disorder or non-alignment of liquid crystals.

Japanese Patent No. 2859093 describes a liquid crystal display device based on an electrically controlled birefringence (ECB) mode with improved screen roughness. This liquid crystal display device described in Japanese Patent No. 2859093 is provided with an alignment control window where there is no transparent conductive film at a center of the pixel of a counter electrode (third electrode), due to fixing of a disclination at the center of the pixel. However, the patent document does not disclose any remedial measure for the disclination in a periphery of the pixel. Furthermore, the fixing of the disclination at the center of the pixel can be achieved, but tilting of the liquid crystals at the center of a display electrode is insufficient, and it is difficult to expect a high transmittance. Furthermore, there is no description on a technology for improving a responsiveness of the liquid crystals, and there is no disclosure related to a color filter technology.

In Japanese Patent No. 4459338, as more dielectric layers are laminated above a transparent conductive film (transparent electrode), an effect of the oblique electric field is increased, which is preferable. However, as shown in FIG. 7 of Japanese Patent No. 4459338, there is a problem that vertically aligned liquid crystals remain at the center of the pixel and edges of the pixel even after application of a voltage, and this lead to a decrease in the transmittance or numerical aperture. Furthermore, in the case of using liquid crystals which exhibit positive dielectric constant anisotropy (in Japanese Patent No. 4459338, there is no disclosure regarding liquid crystals which exhibit negative dielectric constant anisotropy), since a control of the liquid crystals at a midsection of the pixel is insufficiently achieved, it is difficult to increase the transmittance. Therefore, this is a technology that is difficult to employ in a transflective (semi-transmissive) type liquid crystal display device.

Usually, a basic configuration of a liquid crystal display device of VA mode, TN mode or the like is a configuration in which liquid crystals are interposed between a color filter substrate equipped with a common electrode, and an array substrate equipped with plural pixel electrodes (for example, a transparent electrode that is electrically connected to a TFT element and is formed in a comb-shaped pattern) that drive liquid crystals. In this configuration, a driving voltage is applied between the common electrode of the color filter and the pixel electrodes formed for the array substrate side, and thereby the liquid crystals are driven. Regarding the transparent conductive film as the pixel electrode or the common electrode on the surface of the color filter, usually a thin film of an electrically conductive metal oxide such as an ITO (indium tin oxide), IZO (indium zinc oxide) or IGZO (indium gallium zinc oxide) is used.

A configuration of a color filter in which a blue pixel, a green pixel and a red pixel are formed above a transparent conductive film is disclosed in FIG. 2 of Jpn. Pat. Appln. KOKOKU Publication No. 5-26161. Furthermore, a technology for forming a color filter above a transparent electrode (transparent conductive film), which is a technology of using plural stripe electrodes and liquid crystals that exhibit positive dielectric constant anisotropy, is described in the foregoing Japanese Patent No. 4459338 (for example, FIG. 7 and FIG. 9 of the relevant document).

Furthermore, as a technology for increasing a luminance or brightness in order to obtain a dynamic display with a higher image quality, or for extending a chromaticity range, a technology of adding a yellow pixel or a white pixel in addition to the red pixel, green pixel and blue pixel, and thereby configuring a four-color display, is disclosed in Jpn. Pat. Appln. KOKAI Publication No. 2010-9064, Japanese Patent No. 4460849, and Jpn. Pat. Appln. KOKAI Publication No. 2005-352451.

However, regarding these technologies, there is a need to provide a separate pixel such as a yellow pixel or a white pixel in addition to the existing red pixel, green pixel and blue pixel, and an active element (TFT) for driving this separate pixel and one more color layer for forming a color filter are needed. Thus, an increase in a cost caused by an increase in the number of processes is unavoidable. Furthermore, in a gradation display range in where a yellow display or a white display with high brightness intensity is not necessary, there is a problem that it is necessary to suppress the display of the white pixel or the yellow pixel, or to have a light turned off, and this does not quite lead to an effective increase in the luminance. Furthermore, it has been necessary to adjust a color temperature of a backlight or pixels areas for different colors, in order to take white balance. In addition, in a reflection type display, there is a problem that a display takes on an emphasized yellow tinge in all cases (in order to suppress the yellow tinge, for example, a special blue filter disclosed in Jpn. Pat. Appln. KOKAI Publication No. 2005-352451 is required).

### Summary of Invention

### Technical Problem

It is an object of the present invention to provide a color filter substrate for an oblique electric field liquid crystal display device capable of higher luminance display (hereinafter, dynamic display) or capable of transflective display by achieving a balance between a gradation display and an improvement in responsiveness, and an oblique electric field liquid crystal display device equipped with this color filter substrate.

It is an object of an embodiment of the present invention to provide a liquid crystal display substrate which has reduced disclination, is bright, has satisfactory responsiveness, and is adequate for driving of liquid crystals by an oblique electric field, and a liquid crystal display device equipped with the substrate.

### Solution to the Problems

In a first aspect of the present invention, a color filter substrate for an oblique electric field liquid crystal display device is provided. The color filter substrate includes a transparent substrate, a black matrix that is formed above the transparent substrate and includes openings having a polygonal shape in which opposite sides are parallel to each other, a transparent conducive film that is provided above the black matrix and the transparent substrate within the openings, color pixels of plural colors each having a polygonal shape in which opposite sides are parallel to each other, each of the color pixels being provided above the transparent conductive film and including, within each of the openings, a region that is partitioned into two regions respectively having different transmittances, and a first transparent resin layer that is provided so as to cover the color pixels.

In a second aspect of the present invention, a color filter substrate for an oblique electric field liquid crystal display device is provided. The color filter substrate includes a (transparent substrate, a transparent conductive film that is formed above the transparent substrate, a black matrix that is provided above the transparent conductive film and includes openings having a polygonal shape in which opposite sides are parallel to each other, color pixels of plural colors each having a polygonal shape in which opposite sides are parallel to each other, each of the color pixels being provided above the black matrix and above the transparent conductive film within the openings and comprising, within each of the openings, a region that is partitioned into two regions respectively having different transmittances, and a first transparent resin layer that is provided so as to cover the color pixels. The black matrix is formed of a material having a higher relative permittivity than relative permittivities of the color pixels.

In a third aspect of the present invention, a color filter substrate for an electric field liquid crystal display device is provided. The color filter substrate includes a transparent substrate, a transparent conductive film that is formed above the transparent substrate, a black matrix that is provided above the transparent conductive film and includes openings having a polygonal shape in which opposite sides are parallel to each other, and color pixels of plural colors each having a polygonal shape in which opposite sides are parallel to each other, each of the color pixels being provided above the black matrix and above the transparent conductive film within each of the openings. The transparent conductive film has, at a central area of each of the openings, a linear slit that is parallel to a side in a longitudinal direction of the opening.

In a fourth aspect of the present invention, a color filter substrate for an electric field liquid crystal display device is provided. The color filter substrate includes a transparent substrate, a black matrix that is formed above the transparent substrate and includes openings having a polygonal shape in which opposite sides are parallel to each other, a transparent conductive film that is provided above the black matrix and above the transparent substrate within the openings, and color pixels of plural colors each having a polygonal shape in which opposite sides are parallel to each other, and the color pixels being provided above the transparent conductive film. The transparent conductive film has, at a central area of each of the openings, a linear slit that is parallel to a side in a longitudinal direction of the opening.

In a fifth aspect of the present invention, an oblique electric field liquid crystal display device is provided. The oblique electric field liquid crystal display device includes the color filter substrate according to any one of the first to fourth of the present invention as described above; an array substrate disposed to face the color filter substrate, the array substrate having elements for driving liquid crystals arranged in a matrix form; and a liquid crystal layer interposed between the color filter substrate and the array substrate. The array substrate includes a first electrode and a second electrode, to which different potentials are applied in order to drive liquid crystals, correspondingly in each of the color pixels of the color filter substrate in a planar view.

In a sixth aspect of the present invention, an oblique electric field liquid crystal display device is provided. The oblique electric field liquid crystal display device includes: a color filter substrate including a transparent substrate, a black matrix that is formed above the transparent substrate and includes openings having a polygonal shape in which opposite sides are parallel to each other, a transparent conductive film that is provided above the black matrix and above the transparent substrate within the openings, and color pixels of plural colors that are formed above the transparent conductive film and each have a polygonal shape in which opposite sides are parallel to each other, with the transparent conductive film having, at a center of each of the openings, a linear slit that is parallel to a side in a longitudinal direction of the opening; an array substrate that is disposed to face the color filter substrate and includes a first electrode having a comb-shaped pattern that is connected to an active element for driving liquid crystals, and a second electrode having a comb-shaped pattern that is provided with an insulating layer interposed between the first electrode and the second electrode, and protrudes from an end of the first electrode in a direction that becomes distant from a center that bisects the opening in a planar view; and a liquid crystal layer that is interposed between the color filter substrate and the array substrate.

In a seventh aspect of the present invention, an oblique electric field liquid crystal display device is provided. The oblique electric field liquid crystal display device includes: a color filter substrate including a transparent substrate, a transparent conductive film formed above the transparent substrate, a black matrix that is formed above the transparent conductive film and includes openings having a polygonal shape in which opposite sides are parallel to each other, and color pixels of plural colors that are formed above the black matrix and above the transparent conductive film within the openings and each have a polygonal shape in which opposite sides are parallel to each other, with the transparent conductive film having, at a center of each of the openings, a linear slit that is parallel to a side in a longitudinal direction of the opening; an array substrate that is disposed to face the color filter substrate and includes a first electrode having a comb-shaped pattern that is connected to an active element for driving liquid crystals, and a second electrode having a comb-shaped pattern that is provided with an insulating layer interposed between the first electrode and the second electrode, and protrudes from an end of the first electrode in a direction that becomes distant from a center that bisects the opening in a planar view; and a liquid crystal layer that is interposed between the color filter substrate and the array substrate.

In an eighth aspect of the present invention, an oblique electric field liquid crystal display device is provided. The oblique electric field liquid crystal display device includes: an array substrate including a first electrode having a comb-shaped pattern that is connected to an active element for driving liquid crystals, and a second electrode having a comb-shaped pattern that is provided with an insulating layer interposed between the first electrode and the second electrode, and protrudes from an end of the first electrode in a direction that becomes distant from a center that bisects the opening in a planar view; a color filter substrate that is disposed to face the array substrate and includes a transparent substrate, a transparent conductive film formed above the transparent substrate, a black matrix that is formed above the transparent conductive film and includes openings having a polygonal shape in which opposite sides are parallel to each other, color pixels of plural colors that are formed above the black matrix and above the transparent conductive film within the openings and each have a polygonal shape in which opposite sides are parallel to each other, a first transparent resin layer provided so as to cover the color pixels, and a set of linear conductors formed from a transparent conductive film, the linear conductors being disposed above the first transparent resin layer and being disposed symmetrically with respect to a center of the pixel and in parallel to the comb-shaped pattern of the second electrode on an inner side of the second electrode that is closest to a pixel center in a planar view; and a liquid crystal layer that is interposed between the array substrate and the color substrate.

### Brief Description of Drawings

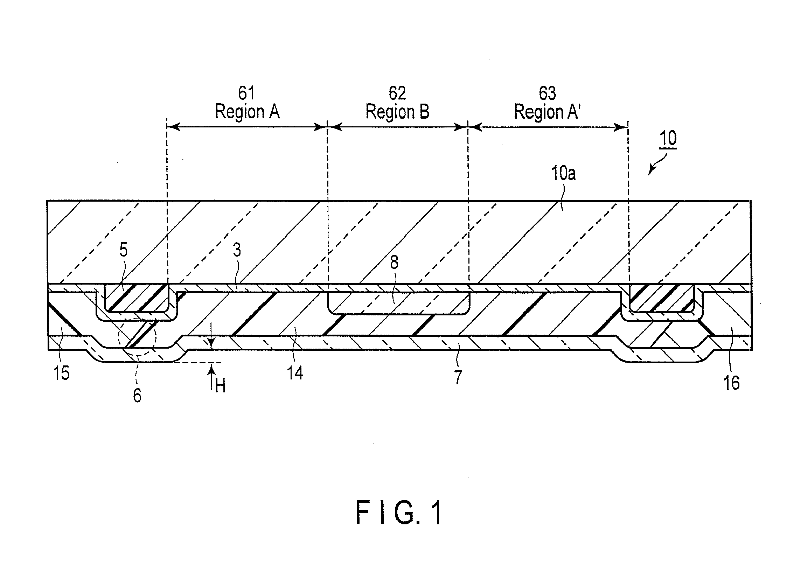

FIG. 1 is a cross-sectional diagram illustrating a color filter substrate according to a first embodiment of the present invention.

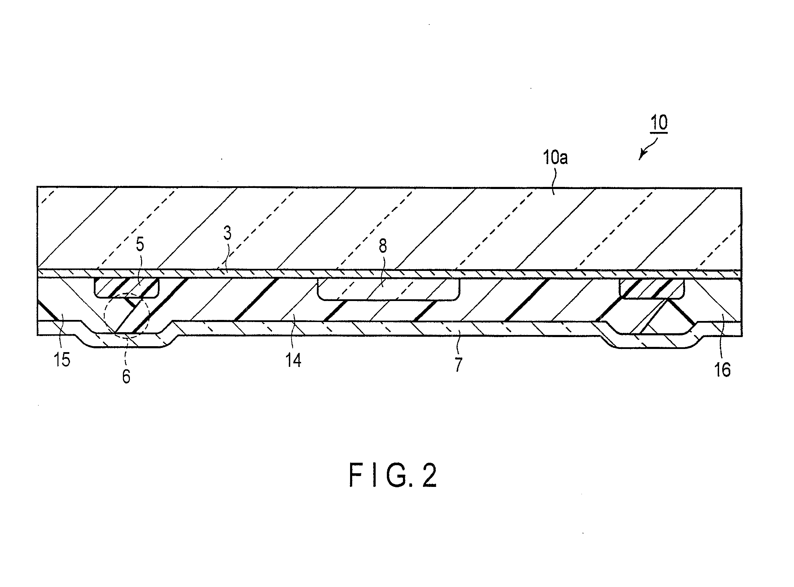

FIG. 2 is a cross-sectional diagram illustrating the color filter substrate according to the first embodiment of the present invention.

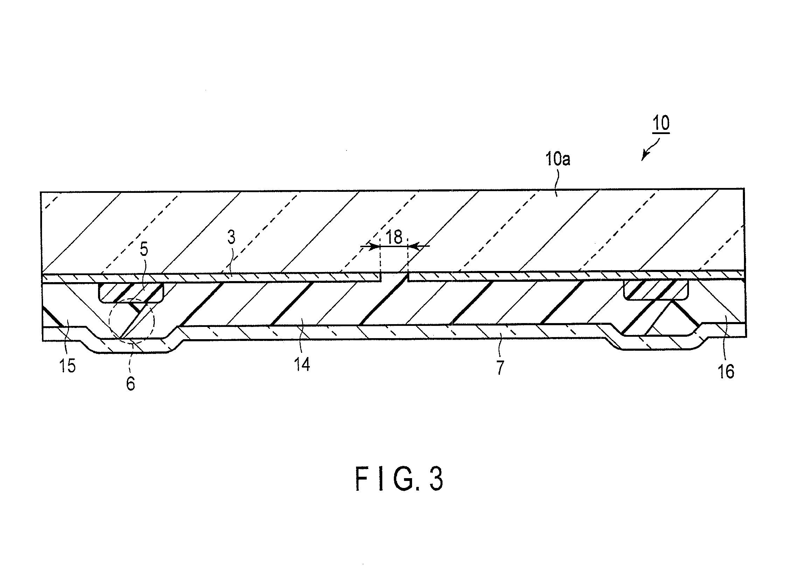

FIG. 3 is a cross-sectional diagram illustrating the color filter substrate according to the first embodiment of the present invention.

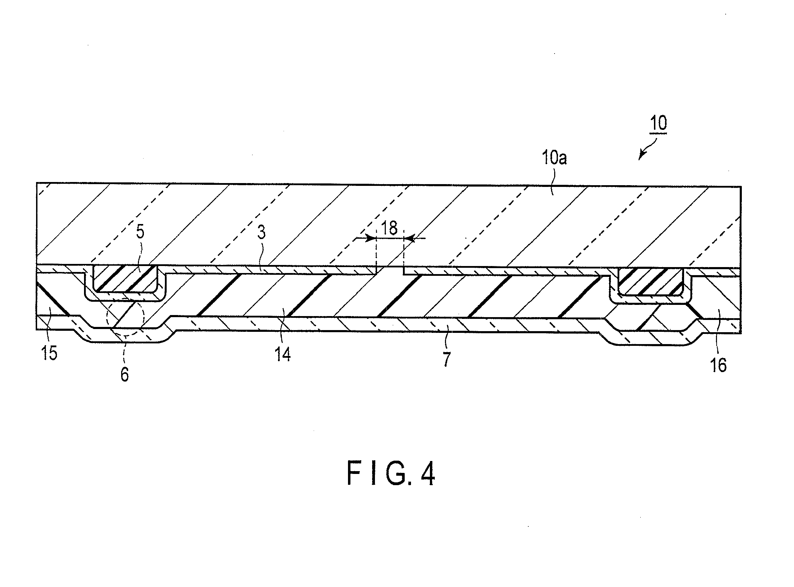

FIG. 4 is a cross-sectional diagram illustrating the color filter substrate according to the first embodiment of the present invention.

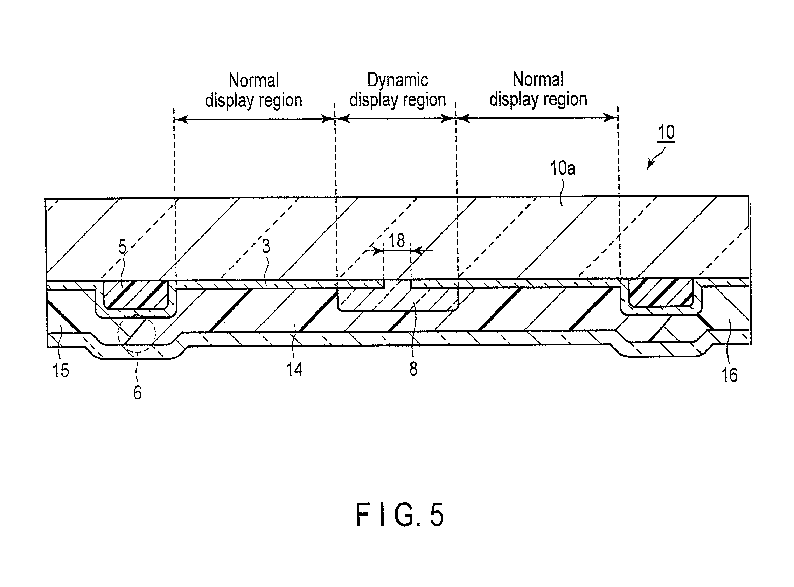

FIG. 5 is a cross-sectional diagram illustrating the color filter substrate according to the first embodiment of the present invention.

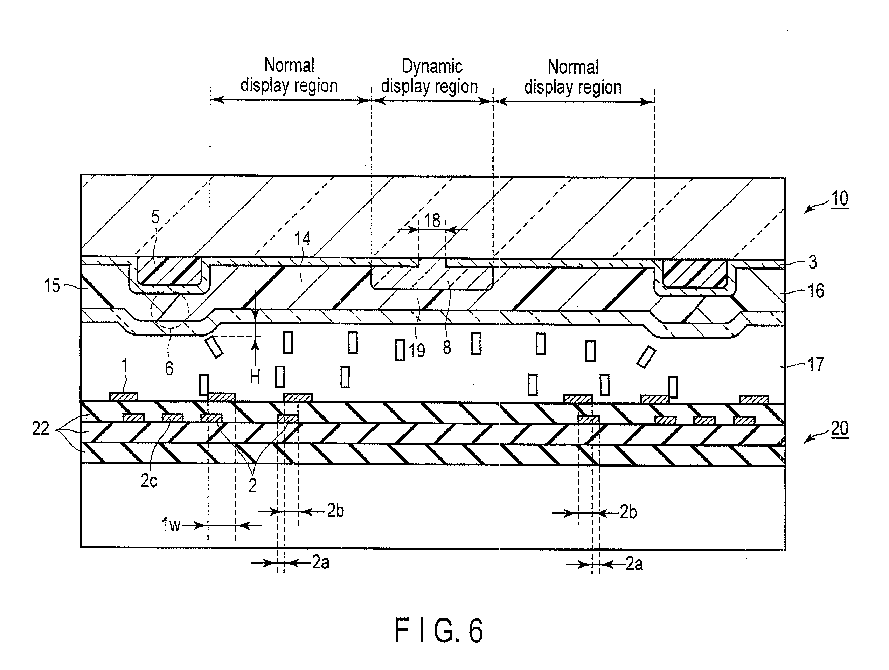

FIG. 6 is a diagram illustrating an operation of liquid crystals of a liquid crystal display device according to a second embodiment of the present invention.

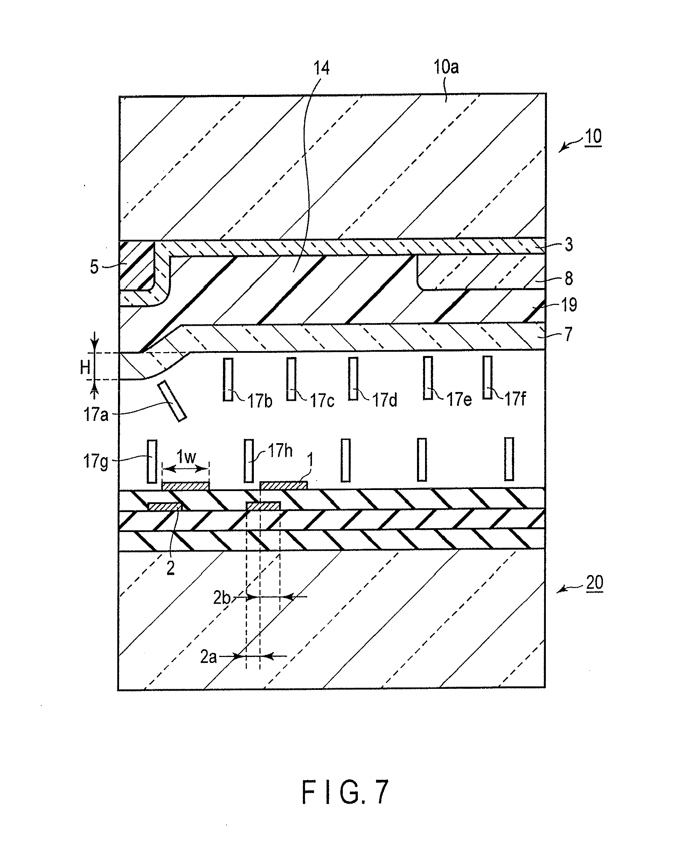

FIG. 7 is a diagram illustrating an operation of the liquid crystals of the liquid crystal display device according to the second embodiment of the present invention.

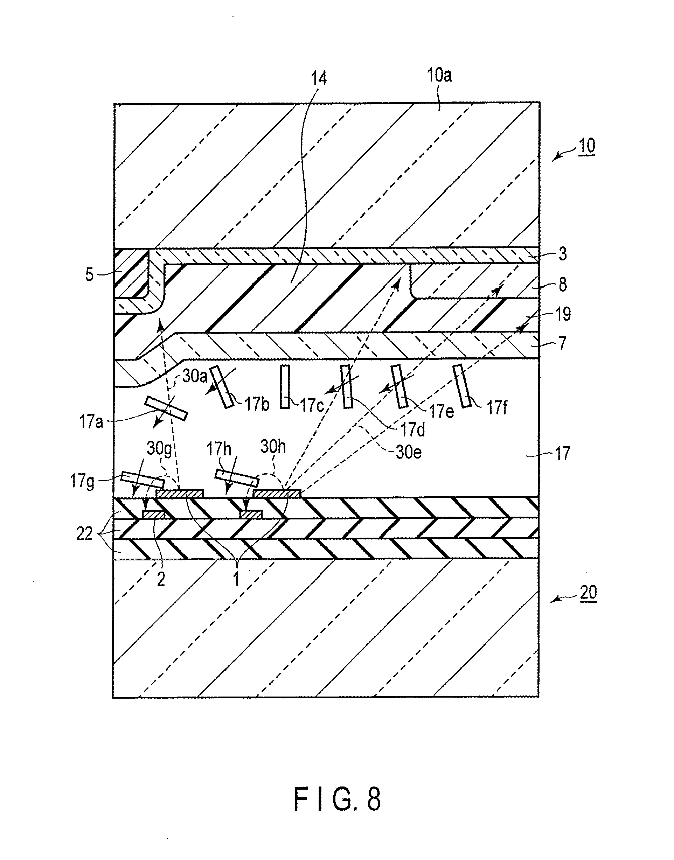

FIG. 8 is a diagram illustrating an operation of the liquid crystals of the liquid crystal display device according to the second embodiment of the present invention.

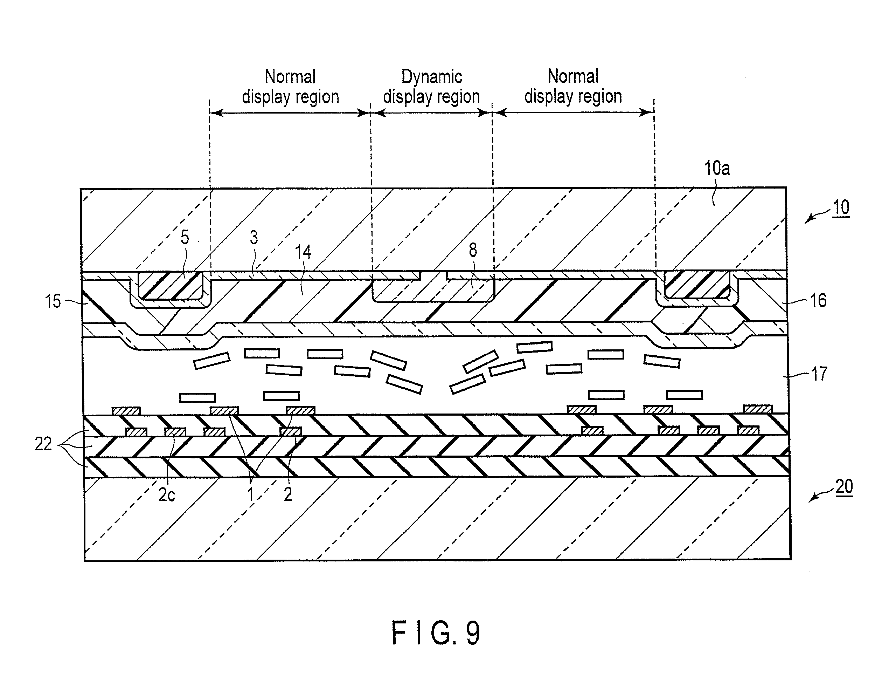

FIG. 9 is a diagram illustrating an operation of the liquid crystals of the liquid crystal display device according to the second embodiment of the present invention.

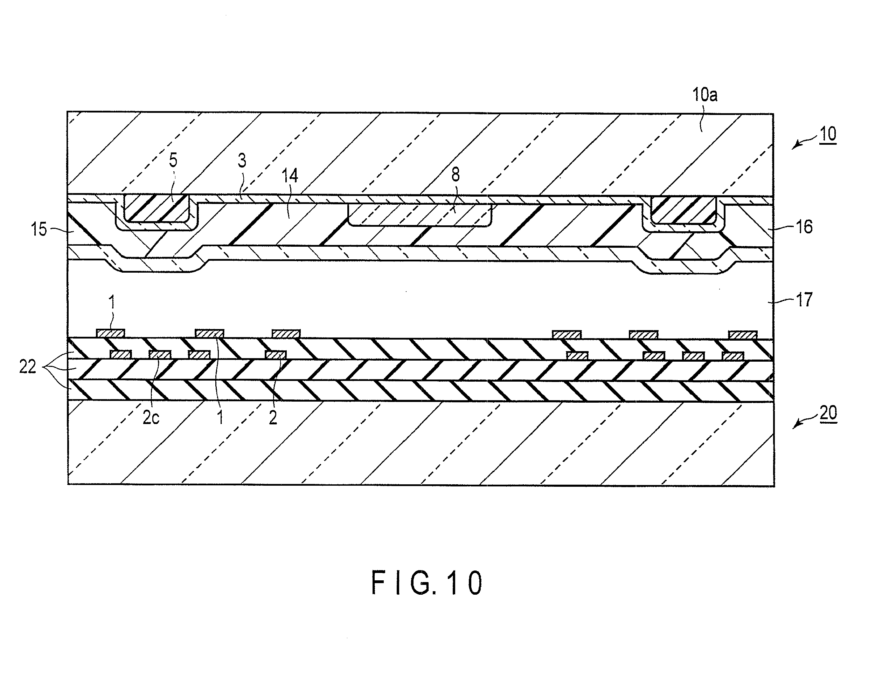

FIG. 10 is a cross-sectional diagram of a liquid crystal display device equipped with the color filter substrate according to the first embodiment of the present invention.

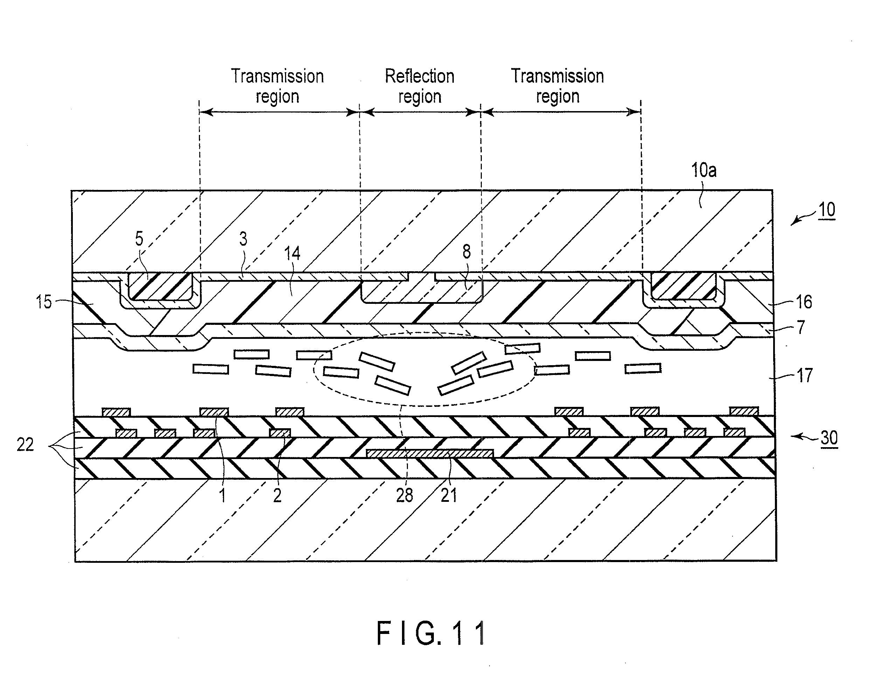

FIG. 11 is a cross-sectional diagram of a liquid crystal display device according to a third embodiment of the present invention.

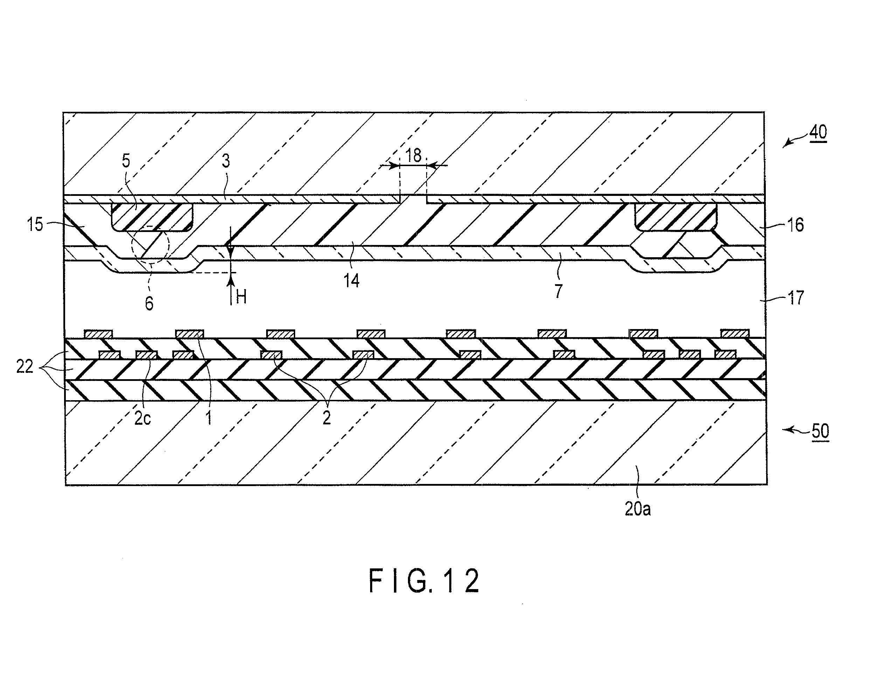

FIG. 12 is a cross-sectional diagram of a liquid crystal display device according to a fourth embodiment of the present invention.

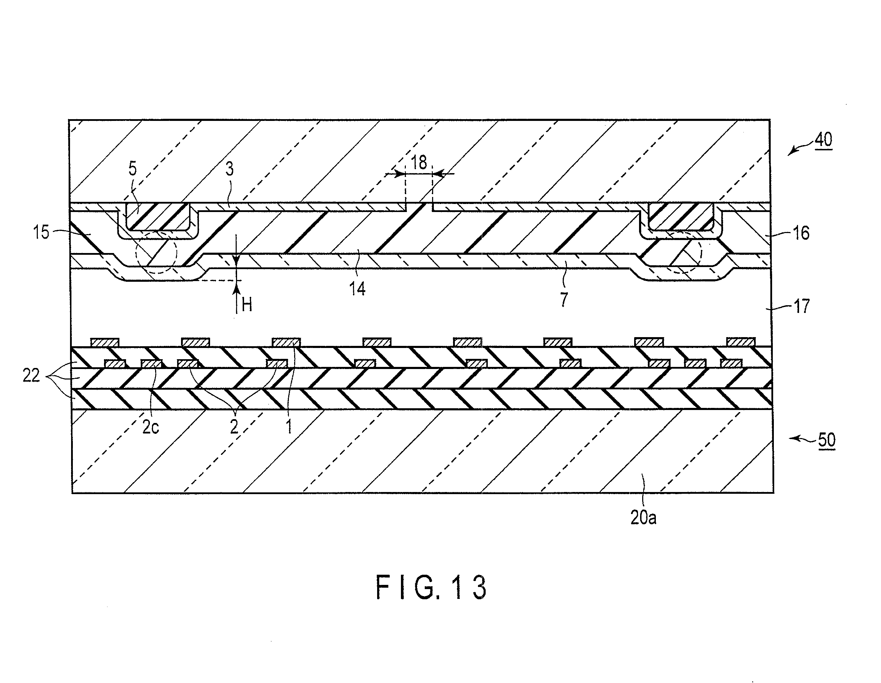

FIG. 13 is a cross-sectional diagram of the liquid crystal display device according to the fourth embodiment of the present invention.

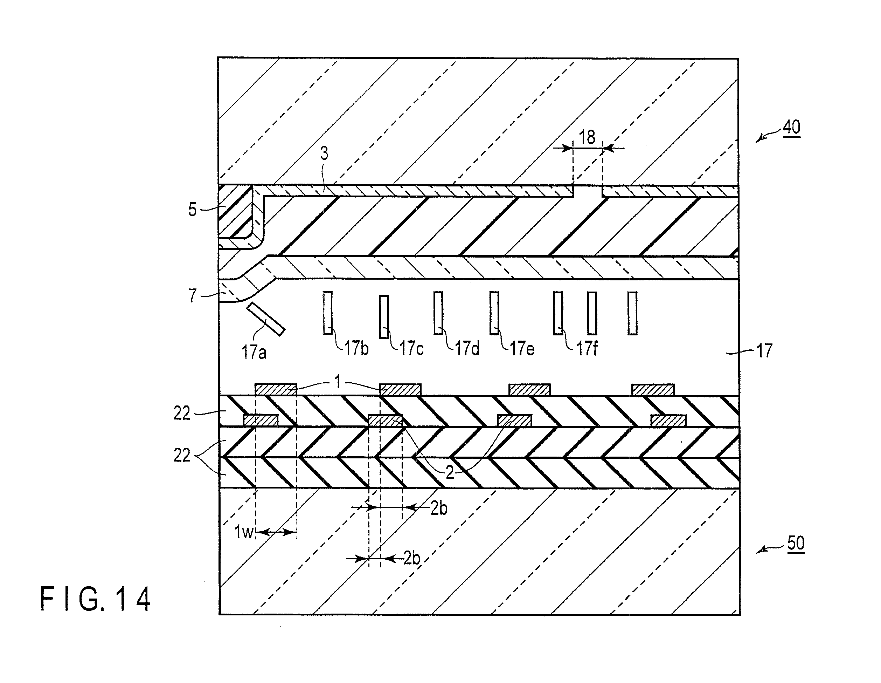

FIG. 14 is a cross-sectional diagram of the liquid crystal display device according to the fourth embodiment of the present invention.

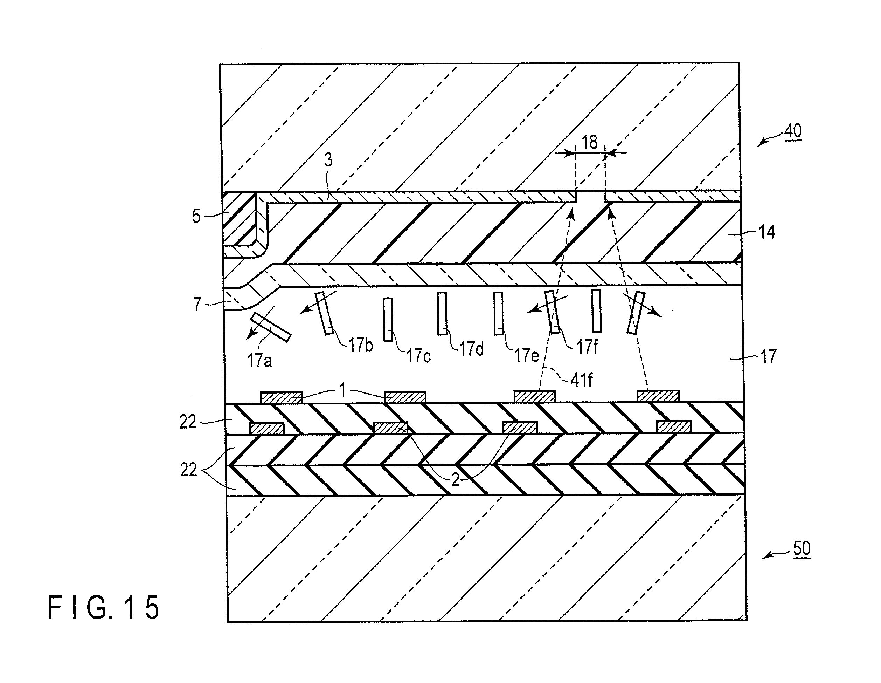

FIG. 15 is a cross-sectional diagram of the liquid crystal display device according to the fourth embodiment of the present invention.

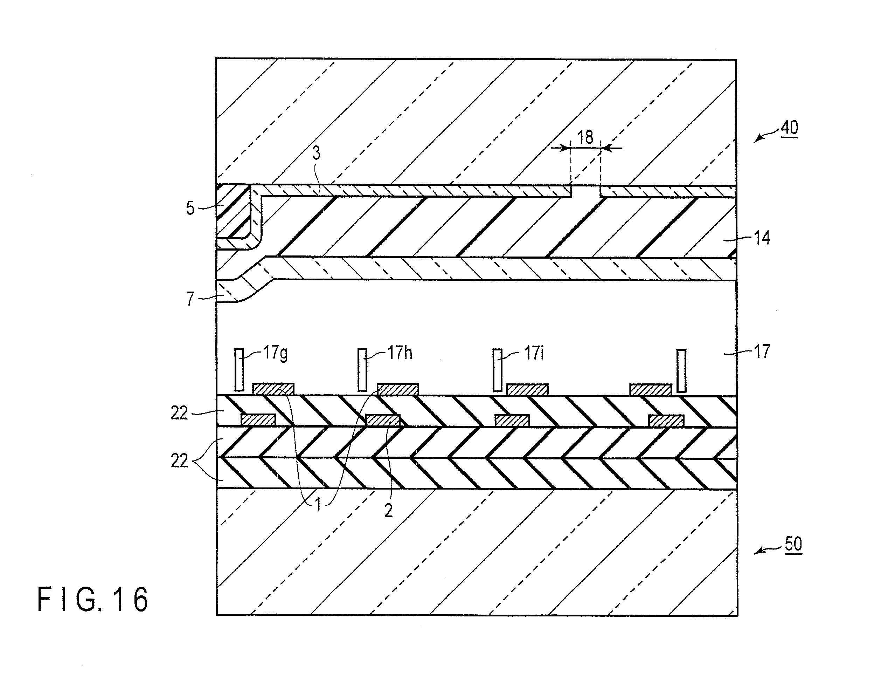

FIG. 16 is a cross-sectional diagram of the liquid crystal display device according to the fourth embodiment of the present invention.

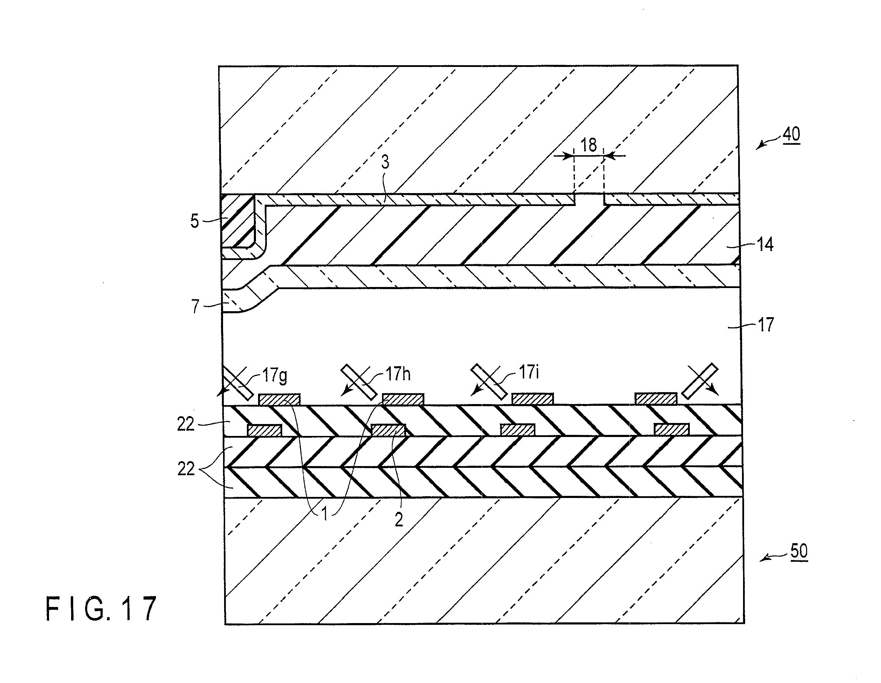

FIG. 17 is a cross-sectional diagram of the liquid crystal display device according to the fourth embodiment of the present invention.

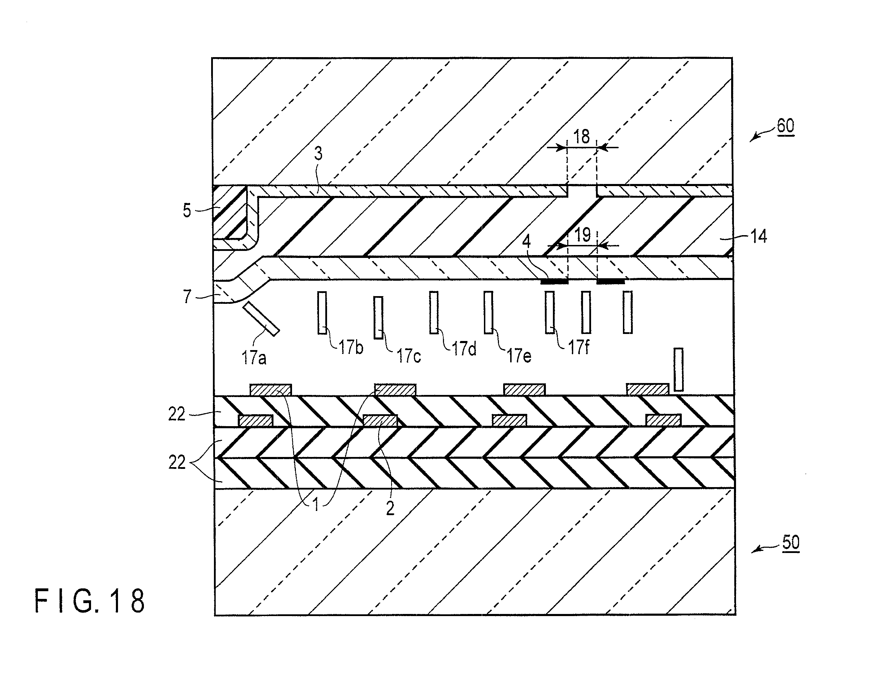

FIG. 18 is a cross-sectional diagram of a liquid crystal display device according to a fifth embodiment of the present invention.

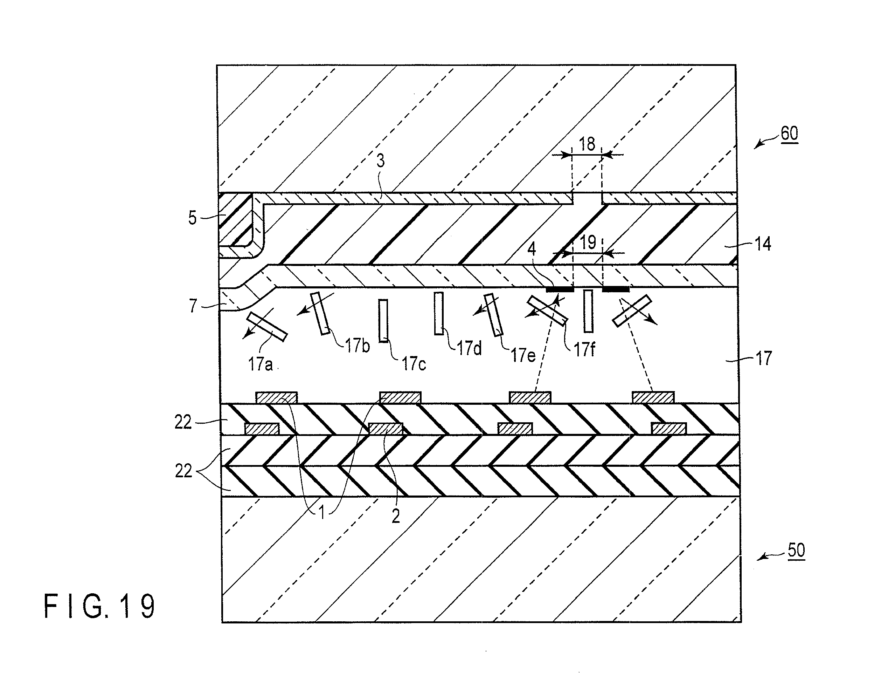

FIG. 19 is a cross-sectional diagram of the liquid crystal display device according to the fifth embodiment of the present invention.

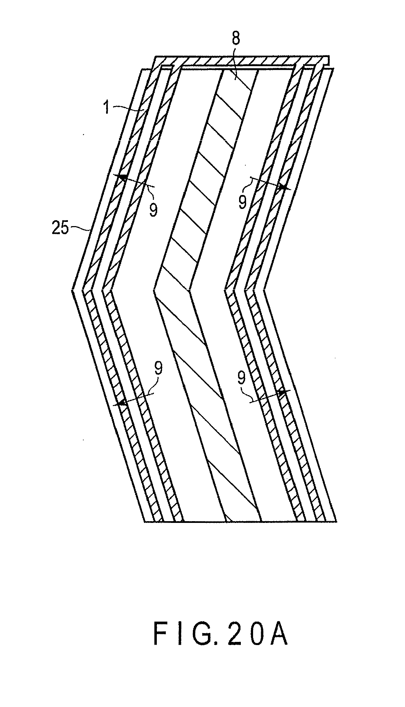

FIG. 20A is a diagram illustrating an example of a pattern shape in a planar view of a first electrode applicable to the embodiments of the present invention.

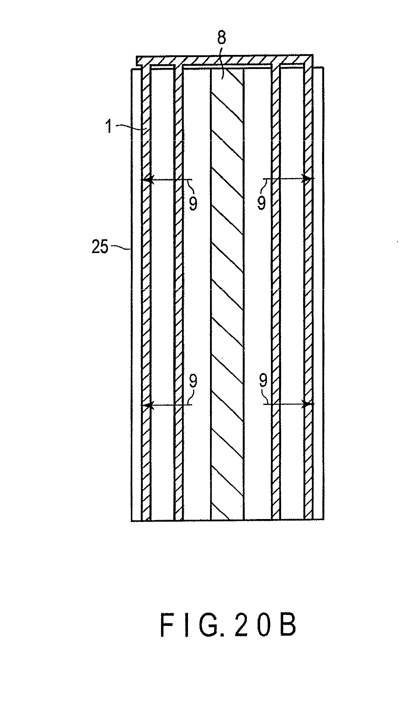

FIG. 20B is a diagram illustrating an example of a pattern shape in a planar view of the first electrode applicable to the embodiments of the present invention.

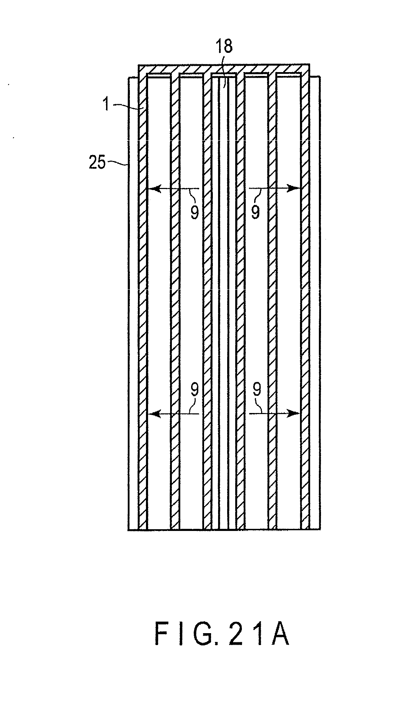

FIG. 21A is a diagram illustrating an example of a pattern shape in a planar view of the first electrode applicable to the embodiments of the present invention.

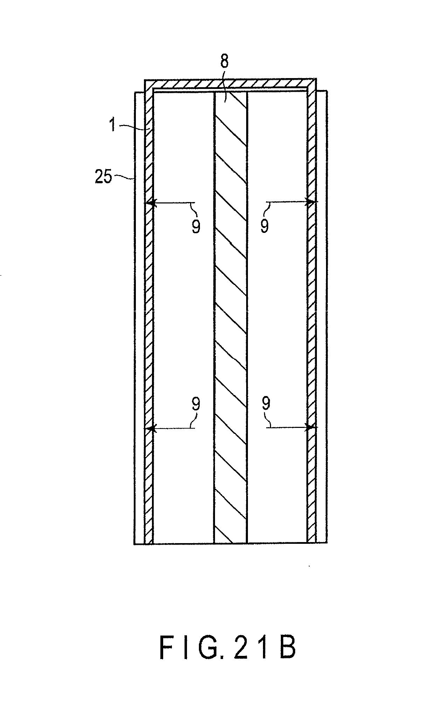

FIG. 21B is a diagram illustrating an example of a pattern shape in a planar view of the first electrode applicable to the embodiments of the present invention.

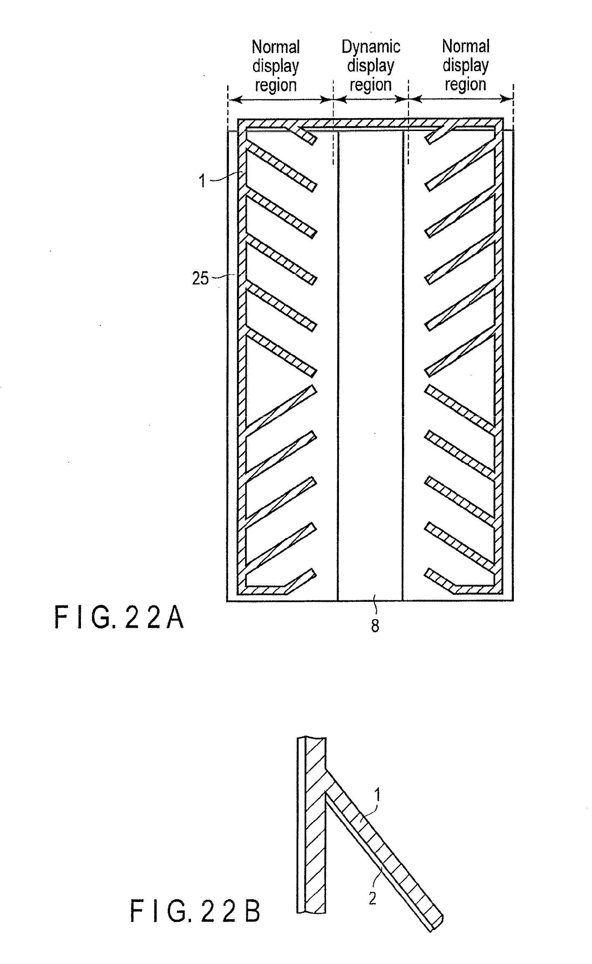

FIG. 22A is a diagram illustrating an example of a pattern shape in a planar view of the first electrode applicable to the embodiments of the present invention.
FIG. 22B is a diagram illustrating a portion of pattern shapes in a planar view of the first electrode and a second electrode applicable to the embodiments of the present invention.

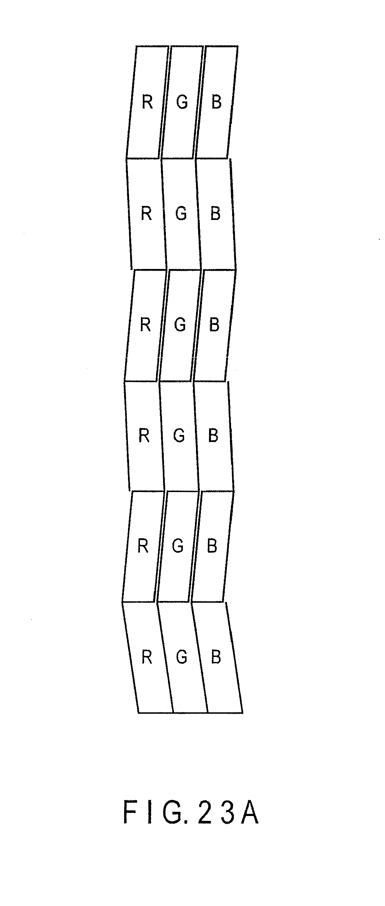

FIG. 23A is a diagram illustrating a pixel arrangement in a case where pixel openings are parallelogram-shaped.

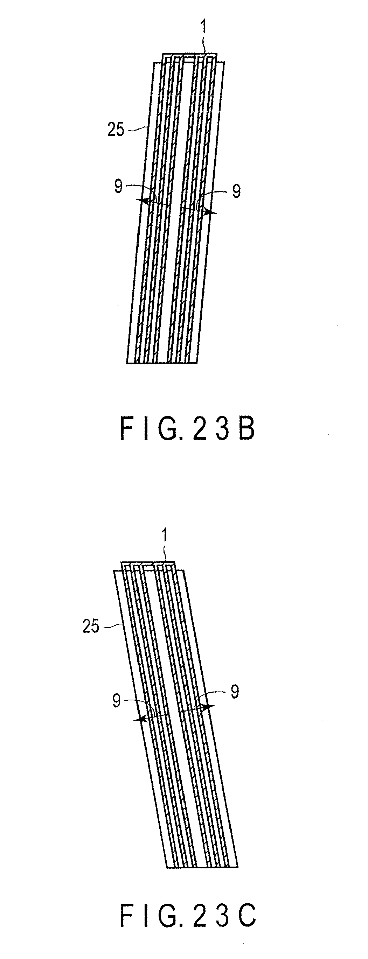

FIG. 23B is a diagram illustrating a pattern shape of the first electrode in the case where the pixel openings are parallelogram-shaped.
FIG. 23C is a diagram illustrating a pattern shape of the first electrode in the case where the pixel openings are parallelogram-shaped.

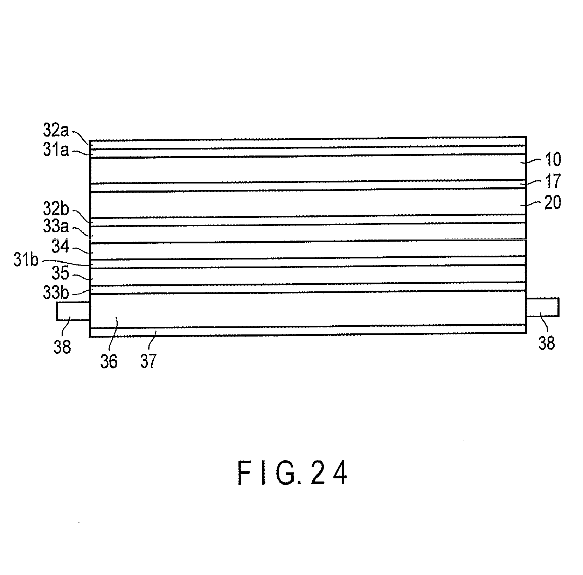

FIG. 24 is a diagram illustrating a transflective liquid crystal display device using a reflective polarizing plate.

Embodiments for Carrying Out the Invention Hereinafter embodiments of the present invention will be described.

A color filter substrate for an oblique electric field liquid crystal display device according to a first embodiment of the present invention includes a transparent substrate; a black matrix that is formed above the transparent substrate and includes openings having a polygonal shape in which opposite sides are parallel to each other; a transparent conductive film provided above the black matrix and the transparent substrate within the openings; color pixels of plural colors that are provided above the transparent conductive film and have a polygonal shape in which opposite sides are parallel to each other; and a first transparent resin layer provided so as to cover the color pixels, the color pixels each including, within the opening, a region that is partitioned into two regions respectively having different transmittances.

These two regions respectively having different transmittances may be partitioned by a transparent resin layer (second transparent resin layer) formed at a midsection of pixel region above the transparent conductive film, and/or a slit formed at the midsection of the pixel region of the transparent conductive film.

When the two regions respectively having different transmittances are partitioned by the transparent resin layer (second transparent resin layer) formed at the midsection of the pixel region above the transparent conductive film, the two regions respectively having different transmittances are partitioned into a region of a thin color layer which covers a stripe(band)-shaped second transparent resin layer that lies above the transparent conductive film within the opening and passes through a central area of the opening, and a region of a color layer other than that. In this case, the second transparent resin layer may be configured to pass through a center of the polygon-shaped opening and to be disposed in parallel to one side of the polygon. Furthermore, the relative permittivity of the second transparent resin layer may be adjusted to be lower than the relative permittivity of the color layer.

In the color filter substrate for the oblique electric field liquid crystal display device according to the first embodiment of the present invention as described above, the polygon-shaped opening may be made rectangular in shape in a planar view. Furthermore, the polygon-shaped opening may be configured to have a rectangular shape having long sides and short sides, and to be folded in the form of the "symbol <" in a planar view near the center in the direction of the long side. Furthermore, the polygon-shaped opening may be made to have a parallelogram shape in a planar view, and may be made such that the respective one-halves of the number of color pixels of the same color have parallelogram shapes with two kinds of different angles of inclination.

The color pixels of plural colors may be configured to include pixels of three colors, namely, red pixels, green pixels and blue pixels, and may be configured such that respective relative permittivities of the color pixels measured at a frequency for driving the liquid crystals are in the range of from 2.9 to 4.4, and the relative permittivity of each of the color pixels may be adjusted to be in a range of ±0.3 with respect to an average relative permittivity of the red pixels, green pixels and blue pixels.

Furthermore, the color pixels of plural colors may be configured to include pixels of three colors, namely, red pixels, green pixels and blue pixels, and may be configured such that the magnitudes of the respective relative permittivities of the color pixels as measured at the frequency for driving the liquid crystals are in a relation of red pixel > green pixel > blue pixel.

A halogenated zinc phthalocyanine pigment may be used as the primary coloring agent of the green pixels.

FIG. 1 is a cross-sectional diagram illustrating a color filter substrate according to the first embodiment of the present invention. In FIG. 1, a black matrix 5 which is a light shielding layer having openings that partition predetermined pixel regions is formed above a transparent substrate 10a, and a transparent conductive film 3 is formed above the transparent substrate including this black matrix 5. A second transparent resin layer 8 is formed at a center of the pixel region above this transparent conductive film 3 in a longitudinal direction of the openings of the black matrix 5.

Color layers formed from green pixels 14, red pixels 15 and blue pixels 16 are formed in the respective pixel regions, the first transparent resin layer 7 is formed thereon, and thereby a color filter substrate 10 is constructed. Meanwhile, a reference numeral 6 denotes an overlapping section of the color layer.

A configuration of laminating color pixels above the transparent conductive film 3 that can be used as a common electrode has an effect that when an electric field is formed between the transparent electrode 3 and the first electrode which is a comb-shaped pixel electrode of an array substrate that will be described below, an equipotential line can be extended in a thickness direction of the color pixels. By extending the equipotential line, a transmittance of the liquid crystal display device can be increased.

The opening of one pixel region can be divided, as illustrated in FIG. 1, into a region A61 and a region A'63, which are regions of a same transmittance, and a region B62, which is a region of a different transmittance. Examples of means for varying the transmittance include changing of a concentration of an organic pigment that is used as a coloring material in these two kinds of regions with different transmittances, or replacing a portion of the color pixels with the transparent resin layer 8 so as to be the same as the region B62. Furthermore, for example, a technique of providing a depression in advance at the area corresponding to the region B62 in a color pixel, and filling the depression with a transparent resin to flatten the area, may also be used. It is desirable that these two kinds of regions with different transmittances are flattened with a film thickness difference of, for example, ±0.3 µm or less.

A height H of the overlapping section 6 of the color layer from the surface of the pixel region is desirably in the range of from 0.5 µm to 2 µm, which is a height that affects a control of the liquid crystal alignment (inclination of liquid crystals).

FIG. 2 illustrates a first modification example of the color filter substrate 10 shown in FIG. 1, in which the transparent conductive film 3 is formed above the transparent substrate 10a before the formation of the black matrix 5, and the black matrix 5 is provided above the transparent conductive film 3. FIG. 3 illustrates a second modification example of the color filter substrate 10 shown in FIG. 1, in which in the color filter substrate 10 shown in FIG. 2, the second transparent resin layer 8 is not formed, but a slit 18 is formed for the transparent conductive film 3. FIG. 4 illustrates a third modification example of the color filter substrate 10 shown in FIG. 1, in which in the color filter substrate 10 shown in FIG. 1, the second transparent resin layer 8 is not formed, but a slit 18 is formed for the transparent conductive film 3. FIG. 5 is another modification example of the color filter substrate 10 shown in FIG. 1, in which in the color filter substrate 10 shown in FIG. 1, a slit 18 is formed together with the second transparent resin layer 8.

A second embodiment of the present invention relates to an oblique electric field liquid crystal display device which uses liquid crystals that exhibit a vertical alignment as an initial alignment, is intended for a liquid crystal display device of normally black display as a primary target, and is configured such that the color filter substrate according to the first embodiment of the present invention described above and an array substrate including a liquid crystal driving element such as a TFT formed thereon are disposed to face each other and sealed, with a liquid crystal layer interposed therebetween. Therefore, A technology according to the present embodiment can be applied to a liquid crystal display device which uses liquid crystals that exhibit a vertical alignment as an initial alignment, and tilts in a substrate planar direction when a voltage is applied. In addition, in the present embodiment, utilization is made of an oblique electric field generated in an electrode configuration in which a transparent conductive film, which is a third electrode, is provided for a color filter substrate with respect to a first electrode, which is a pixel electrode provided for the array substrate side, and a second electrode which has a potential different from that of this first electrode.

In regard to such an oblique electric field liquid crystal display device, when a driving voltage is applied between the first electrode, and the second electrode as well as the third electrode which is the transparent conductive film, liquid crystal molecules in a region of liquid crystals corresponding to the opening move so as to tilt in opposite directions that are axially symmetric with respect to a straight line which passes through a center of the opening and bisects the opening in a planar view.

The first electrode and the second electrode can adopt a shape having a linear pattern such as a comb-shaped pattern. Longitudinal directions of patterns of these first electrode and second electrode may be divided in two directions, or in four or more directions, within a pixel that is formed for the polygon-shaped opening of the black matrix.

As shown in a schematic cross-sectional diagram of the liquid crystal display device of FIG. 6 or FIG. 14 to which the present embodiment is applied, the linear pattern of the second electrode can be made to protrude in a width direction from the linear pattern of the first electrode. The protrusion section 2a, which will be described in detail below, has an action of setting a direction of tilt of liquid crystals (direction of an alignment at a time of liquid crystal display) after a driving voltage is applied to the liquid crystals 17. Those liquid crystals located close to the surface on the color filter substrate are operated by an oblique electric field extending from the first electrode toward the direction of the third electrode which is a transparent conductive film. By adjusting the direction in which the liquid crystals would tilt under the action of this oblique electric field, to match the direction of the protrusion section 2a described above, liquid crystal molecules in one liquid crystal domain within a pixel can be caused to tilt at a high speed in the same direction. When two, or four or more of the liquid crystal domains are formed within in one pixel, a wide field of vision can be secured.

The TFT of the liquid crystal display device may be formed from silicon, but when the TFT is formed from, for example, a complex metal-oxides semiconductor, the aperture ratio of the pixels can be increased. Representative examples of the channel material for a complex metal-oxides semiconductor TFT include complex metal-oxides of indium, gallium and zinc called IGZO.

Furthermore, among the liquid crystals that can be applied to the present embodiment, liquid crystals which exhibit negative dielectric constant anisotropy and have an initial vertical alignment can be suitably applied. In this case, a vertically aligned film is used; however, an alignment treatment such as a photo-alignment or rubbing can be omitted by using the technology according to the present embodiment. As will be described below, in the present embodiment, strict control of the tilt angle to 89° that is required in conventional VA (vertical alignment) is unnecessary, and the liquid crystals having the initial vertical alignment of 90° can be used. Furthermore, in the case of the initial vertical alignment, unlike a liquid crystal display device of initial horizontal alignment, strict optical axis alignment of a polarizing plate or retardation plate that is attached to one surface or both surfaces of a liquid crystal display device is not required. In the case of initial vertical alignment, the retardation upon no voltage application is 0 nm, and for example, even if there is a slight shift from a slow axis of the polarizing plate, a light leakage does not easily occur, and an almost perfect black display can be obtained. In the liquid crystals in the initial horizontal alignment state, a light leakage occurs if there is an optical axis shift of several degrees from the polarizing plate, and it is disadvantageous from a viewpoint of a contrast of the liquid crystal display device.

In the liquid crystal display device according to the second embodiment of the present invention, a movement of the liquid crystal molecules on the color filter substrate and the liquid crystal molecules above the array substrate that is disposed to face the color filter substrate will be described with reference to FIG. 6, FIG. 7, FIG. 8, FIG. 9.

FIG. 6 is a schematic cross-sectional diagram of a liquid crystal display device according to the second embodiment of the present invention. Regarding the color filter substrate 10, the substrate illustrated in FIG. 5 is used. FIG. 7 is a partially magnified diagram of FIG. 6.

As illustrated in FIG. 7, liquid crystals that exhibit initial vertical alignment, except for a liquid crystal molecule 17a in the vicinity of the shoulders of the black matrix 5 and the color layer overlapping section 6, is aligned vertically at a surface of the color filter substrate 10 and a surface of the array substrate 20 (liquid crystal molecules 17b to 17f). A liquid crystal molecule 17a is obliquely aligned in an initial alignment state at the shoulder of the color layer overlapping section 6.

As illustrated in FIG. 8, when a voltage is applied to the first electrode 1 which is a pixel electrode, the liquid crystal molecule 17a in the vicinity of the shoulder of the color layer overlapping section 6 starts to tilt in a direction of an arrow so as to be perpendicular to a line of electric force 30a that is directed from the first electrode 1 toward a direction of the third electrode 23, which is a common electrode. As the third electrode 3 at the color layer overlapping section 6 is formed above the black matrix 5, the third electrode is closer to the first electrode 1, and thus, a stronger effective voltage is applied to the liquid crystal molecule 17a than to other liquid crystal molecules 17d, 17e and 17f. Furthermore, the liquid crystal molecules in the areas other than the vicinity of the surface of the color filter substrate 10 tilt in the horizontal direction of the substrate surface as the tilting of the liquid crystal molecule 17a propagates in the planar direction. Furthermore, the liquid crystal molecules 17e and 17f that are distant from the first electrode 1 at the center of the pixel tilt similarly so as to be vertical to the direction of the lines of electric force 30e and 30f from the first electrode 1. However, since the liquid crystal molecules 17e and 17f are at positions slightly distant from the first electrode 1, and the angle of tilt decreases in accordance with this distance. FIG. 9 illustrates a final state of alignment of the liquid crystal molecules. In the diagram, a reference numeral 2c represents a second electrode (common electrode) that is positioned below the black matrix 5. Meanwhile, in a configuration in which the black matrix 5 is formed above the third electrode, the liquid crystal molecule 17a in the vicinity of the shoulder of the color layer overlapping section 6 can be subjected to a strong electric field by using a material having a high dielectric constant as the black matrix base material.

On the other hand, in regard to the liquid crystal molecules that are in contact with the array substrate 20 side, liquid crystal molecules 17g and 17h in the vicinity of the first electrode 1, which is a pixel electrode, and the second electrode 2, which is a common electrode, particularly above the protruding section of the second electrode 2 tilt significantly and very quickly immediately after voltage application, so as to be perpendicular to the lines of electric force 30g and 30h. The reason why the movement of the liquid crystal molecules 17g and 17h is so fast is that the distances from the first electrode 1 and the second electrode 2 are extremely short, and therefore, these liquid crystal molecules are subjected to the strongest electric field. When triggered by a movement of the liquid crystal molecules 17g and 17h, the liquid crystals within the pixel (strictly speaking, one liquid crystal domain) tilt all at once in the same direction in a manner synchronized with the movement of the liquid crystal molecule 17a and the like in the vicinity of the shoulder. However, as described above, the angles of inclination at the liquid crystals above the third electrode 3 and of the liquid crystal molecules at positions that are distant from the first electrode 1 become smaller.

Meanwhile, in order to make tilting of the liquid crystal molecules above the protruding section easier for orientation, processing such as tapering of an end of the first electrode, increasing a film thickness of the first electrode, etching of an area of an insulating layer below the first electrode, or decreasing a thickness of the insulating layer, can also be applied.

After the application of a driving voltage to the liquid crystals, as illustrated in FIG. 8, the liquid crystals 17 tilt symmetrically under the effect of the first electrode 1, second electrode 2, and third electrode 3 that are disposed symmetrically with respect to the center of the pixel, as illustrated in FIG. 6. Due to this symmetry, the viewing angle can be widened at the time of liquid crystal display.

In a normal display region shown in FIG. 6, a gradation display is carried out according to the magnitude of the voltage applied between the first electrode, and the second and third electrodes. In a dynamic display region, a light transmission is initiated at a voltage higher than that for the normal display region. In FIG. 8, as a light is transmitted through an area of thin color layer 19 above the second transparent resin layer 8, a brighter display can be achieved. That is, by applying a voltage that is higher than the driving voltage applied between the first electrode and the second and third electrodes, a bright dynamic display is enabled.

In addition, the brightness of the dynamic display can be independently adjusted by providing two active elements (TFT elements) in one pixel, and for example, separately driving a set of the first electrodes on the inner side close to the dynamic display region shown in FIG. 9 by using one TFT element.

FIG. 10 shows a schematic cross-sectional diagram of a liquid crystal display device using the color filter substrate 10 shown in FIG. 1. The movement of the liquid crystal molecules of this liquid crystal display device is also similar to that of the liquid crystal display device described above.

A schematic cross-sectional diagram of a transflective type liquid crystal display device, which is a third embodiment of the present invention, is shown in FIG. 11. The array substrate 30 of the liquid crystal display device illustrated in FIG. 11 includes, at the center of the pixel, a light reflective film 21 based on an aluminum alloy thin film. The light reflective film is electrically independent.

The liquid crystal display in a transmission region is a normal gradation display region based on transmission, similarly to the normal display region shown in FIG. 6 and FIG. 7. In a reflection region, by adjusting the inclination of the liquid crystal molecules in this region, the retardation (And) is reduced approximately a half of the retardation of the transmission region, and thereby, a reflective display utilizing external light is enabled. Liquid crystals 28 in the reflection region are such that since the liquid crystals are at positions distant from the first electrode 1, a change in alignment of the liquid crystal molecules associated with a change in the applied voltage becomes mild. An applied voltage dependencies of a transmitted light and reflected light can be made analogous by utilizing the difference between the reflective display region and the transmissive display region where a change in alignment of the liquid crystal molecules is steep. Accordingly, a satisfactory liquid crystal display may be obtained, in which the reflective display and the transmissive display can be driven under the same driving conditions at a high contrast and without any tone reversal. In the present embodiment, the liquid crystal cell thickness adjusting layer needed in the reflection region (a thickness adjusting layer that makes the thickness to 1/2 of the thickness of liquid crystals at the transmission region) can be made unnecessary.

Next, an action of a slit formed in the transparent conductive film (a fine line-shaped opening where the transparent conductive film is not formed) of the color filter substrate of the liquid crystal display device according to a fourth embodiment of the present invention will be explained with reference to FIG. 12, FIG. 13, FIG. 14, FIG. 15, and FIG. 16. FIG. 14 to FIG. 16 are partially magnified diagrams of FIG. 11, and are explanatory diagrams for movements of various liquid crystals above the color filter substrate 40 and above the array substrate 50.

FIG. 12 and FIG. 13 are schematic cross-sectional diagrams of a liquid crystal display device according to a fourth embodiment of the present invention. The first electrode 1 and the second electrode 2 of the protrusion electrode configuration are disposed symmetrically with respect to the center of the pixel. At the center of the pixel of the color filter substrate 40, a slit 18 at which a transparent conductive film is not formed is formed in a direction perpendicular to the paper face.

The alignment and operation of the liquid crystals 17 in the vicinity of the color filter substrate surface will be described by using FIG. 14 and FIG. 15. As illustrated in FIG. 14, when no voltage is applied, the liquid crystals 17 except for the liquid crystal molecule 17a are aligned perpendicularly to the surface of the color filter substrate 10. As illustrated in FIG. 15, when a voltage is applied between the first electrode 1 and the third electrode 3, the liquid crystal molecule 17a in the vicinity of the shoulder of the color layer overlapping section 6 starts to tilt in a direction of an arrow so as to be perpendicular to a line of electric force 41a. The liquid crystal 17f in the vicinity of the slit 18 at the center of the pixel starts to tilt in a direction of an arrow so as to be perpendicular to a line of electric force 41f. When triggered by these liquid crystals, liquid crystals on the side of the color filter substrate surface tilt respectively in symmetrically opposite directions with respect to the center of the pixel.

An alignment and operation of the liquid crystals 17 in the vicinity of the array substrate surface will be described by using FIG. 16 and FIG. 17. FIG. 16 illustrates liquid crystals of an initial vertical alignment. FIG. 17 illustrates liquid crystal molecules 17g, 17h and 17i that start to tilt above the protruding section 2a of the first electrode 1 and the second electrode after voltage application. On the array substrate side, when triggered by these liquid crystals, the liquid crystals tilt all at once respectively in symmetrically opposite directions with respect to the center of the pixel.

FIG. 18 and FIG. 19 are partially magnified diagrams explaining a liquid crystal display device according to a fifth embodiment of the present invention, in which a color filter substrate 60 provided with a set of linear conductors 4 in the vicinity of the center of the pixel at the first transparent resin layer 7 is used. FIG. 19 illustrates movements of the liquid crystal molecules after voltage application. The liquid crystal molecule 17f in the vicinity of the center of the pixel tilts more rapidly and more significantly in a direction of an arrow than the liquid crystal molecule 17f in FIG. 17 as shown above. This is because, since linear conductors 4 having the same common potential as that of the third electrode are formed at a position closer to the first electrode 1, the liquid crystal molecule 17f shown in FIG. 19 is subjected to a stronger electric field, and therefore, response becomes faster. Meanwhile, in FIG. 18 and FIG. 19, a slit is formed for the transparent conductive film 3, which is a third electrode; however, the slit may not be formed. Also, in the embodiment described above, the overlapping section 2b of the first electrode and the second electrode can be used as a supplementary capacity.

Here, technical terms used herein will be described briefly.

The black matrix is a light shielding pattern provided along a periphery of a pixel, which is the smallest unit of display, or on two sides of the pixel, in order to increase a contrast of the liquid crystal display. The light shielding layer is a light shielding coating film in which a light shielding pigment is dispersed in a transparent resin, is generally imparted with photosensitivity, and is obtained by forming a pattern by a photolithographic technique including exposure and development.

The color layer refers to a coating film of a coloring composition in which an organic pigment is dispersed in a transparent resin. A pattern formed such that the color layer is superimposed with a portion of the black matrix by a known photolithographic technique is called a color pixel. An effective size of the color pixel is almost the same as that of the opening of the black matrix.

Regarding the polygon in which sides that face each other are parallel, for example, a quadrilateral shape such as a rectangular shape, a parallelogram shape, a hexagonal shape, and the polygon that is folded at the center of the pixel as shown in FIG. 20B can be used.

In the present embodiment, liquid crystals having negative dielectric constant anisotropy can be used. For example, as the liquid crystals having negative dielectric constant anisotropy, nematic liquid crystals having a birefringence of about 0.1 at near room temperature can be used. It is not necessary to particularly limit the thickness of the liquid crystal layer, but Δnd of the liquid crystal layer that can be effectively used in the present embodiment is approximately in the range of 250 nm to 500 nm in the transmissive display region or in transmissive display. An average value of Δnd of the liquid crystal layer at the semi-reflection section can be adjusted to 125 nm to 250 nm which is one-half by adjusting the inclination of the liquid crystal molecules in the reflective display region.

In the Examples of the present invention that will be described in detail below, a liquid crystal material having fluorine atoms in the molecular structure (hereinafter, described as a fluorine-based liquid crystal) can be used as the liquid crystal material.

Furthermore, at the time of the application of a voltage for liquid crystal driving, since a substantially strong electric field is generated at the protruding section of the first electrode and the second electrode, liquid crystal driving can be achieved by using a liquid crystal material having a lower dielectric constant (having lower dielectric constant anisotropy) than that of the liquid crystal materials used in conventional vertical alignment. In general, a liquid crystal material having low dielectric constant anisotropy has lower viscosity, and when an electric field intensity of the same extent is applied, response may be obtained at a higher speed. Furthermore, since a fluorine-based liquid crystal has a low dielectric constant, incorporation of ionic impurities occurs less, deterioration of performance such as a decrease in the voltage maintain rate caused by impurities occurs at a lower level, and display unevenness does not easily occur.

In the present invention, liquid crystals of horizontal alignment can also be applied. In the case of the liquid crystals of initial horizontal alignment, the liquid crystals stand in a direction perpendicular to the substrate surface when a driving voltage is applied, and thus, a light is transmitted. Application of liquid crystals having positive dielectric constant anisotropy and having initial horizontal alignment is also technically possible. However, in order to secure initial horizontal alignment, an alignment treatment such as a rubbing for an alignment film is needed to definitively determine a direction of alignment of the liquid crystals. In the case of liquid crystals having an initial alignment which is vertical, a rubbing treatment or a photo-alignment treatment can be omitted. From this viewpoint, in the present invention, it is preferable to apply liquid crystals of vertical alignment.

Regarding a material of the first electrode 1 and the second electrode 2 of the array substrate side of the liquid crystal display device according to the present embodiment, a conductive metal oxide such as ITO described above can be used. Alternatively, a metal having higher conductivity than a metal oxide can be employed. Furthermore, in the case of a reflective type or transflective type liquid crystal display device, a thin film of aluminum or an aluminum alloy may be used in any of the first electrode 1 and the second electrode 2.

As shown in FIG. 6 or the like, the first electrode 1, the second electrode 2, and a metal wiring of an active element, and the like are formed by inserting therebetween an insulating layer 22 formed of silicon nitride (SiNx) or silicon oxide (SiOx). A film thickness of the insulating layer 22 is not particularly limited since the film thickness depends on driving conditions for liquid crystals, but the film thickness can be selected from, for example, the range of 100 nm to 600 nm. In FIG. 7, graphic illustration of a TFT element or a metal wiring connected to a TFT element is omitted.

In addition, a technology for forming, respectively, a gate wiring or a source wiring by using a single layer of an aluminum alloy having a low contact property for ITO, which is an electrically conductive metal oxide, is disclosed in, for example, Jpn. Pat. Appln. KOKAI Publication No. 2009-105424. Furthermore, further laminating an insulating layer above the first electrode has an effect of alleviating burn-in of liquid crystals (affected by deviation or accumulation of electric charge) at the time of liquid crystal driving, which is preferable. Furthermore, a light reflective film may also be provided as illustrated in FIG. 11, by using a thin film of an aluminum alloy. The reflective film may be made electrically independent, or an active element that is connected to the reflective film can be separately formed in addition to the active element that is connected to the first electrode, and a different voltage can be applied thereto.

In the comb-shaped electrode pattern, two or more linear conductors each having a width of from 2 µm to 20 µm may be electrically connected, and the connection area may be either on one side or on both sides. The interval of the comb-shaped pattern may be selected approximately in the range of 3 µm to 100 µm, in accordance with the liquid crystal cell conditions and the liquid crystal material. The comb-shaped pattern can be formed by varying the formation density or pitch of the comb-shaped pattern and the electrode width within one pixel.

The second electrode 2 can be formed, for example, as illustrated in FIG. 6 or the like, so as to protrude in one direction of the electrode width of the first electrode 1. The protruding direction becomes axially symmetric or point-symmetric with respect to the center of the pixel. The amount of protrusion can be adjusted in a wide variety with the liquid crystal material or driving conditions used, or a dimension such as the liquid crystal cell thickness. The protrusion section 2a is sufficient even with a small amount of from 1 µm to 5 µm. The overlapping section 2b can be used as a supplementary capacity related to the liquid crystal driving.

Meanwhile, a direction of protrusion of the second electrode 2 (hereinafter, a protrusion configuration of the first electrode 1 and the second electrode 2 may be simply referred to as a protruding electrode configuration) is desirably in opposite directions in point symmetry or axial symmetry with respect to the center of the pixel. Furthermore, a pattern protruding to a direction opposite to the direction facing toward the second transparent resin layer 8 in a planar view is desirable.

The comb-shaped electrode pattern may be V-shaped or in an oblique direction in a planar view. Alternatively, the first electrode 1 and the second electrode 2 may have, as illustrated in FIG. 22A and FIG. 22B, a comb-shaped pattern in which the direction is changed by 90° in every 1/4 pixel unit. Thereby, when a voltage for driving the liquid crystals is applied, movements are partitioned into four directions in point symmetry in a planar view, and the display region of a pixel is partitioned into four movement regions. In this case, the comb-shaped electrode can be inclined in the direction of 45° with respect to the center line of the pixel. These electrode patterns are desirably point-symmetric or axially symmetric as viewed from the center of the pixel. The numbers of the first electrode 1 and the second electrode 2, the electrode pitch, and the electrode width can be appropriately selected.

Examples of a pattern shape in a planar view of the first electrode 1 that can be applied to the embodiments described above are presented in FIG. 20A, FIG. 20B, FIG. 21A, FIG. 21b, FIG. 22A, and FIG. 22B. In the first electrode 1, a voltage for driving the liquid crystals is applied, but the second electrode 2 and the third electrode, which is the transparent conductive film 3 disposed on the color filter substrate side, can have a common potential (common). Meanwhile, in FIG. 20A, FIG. 20B, FIG. 21A, FIG. 21B, FIG. 22A, and FIG. 22B, a reference numeral 25 represents an opening (polygonal color pixel) of the black matrix 5, and a reference numeral 9 represents the direction in which the liquid crystal molecules would tilt.

Among the technical features related to the embodiments described above, the movement or action of liquid crystals in a liquid crystal display device equipped with a protruding electrode configuration may be summarized as follows.
(1) Alignment treatments that are conventionally required can be omitted by using liquid crystals having initial vertical alignment and having negative dielectric constant anisotropy as liquid crystals.
(2) The formation of a domain of liquid crystals for an extension of viewing angle is subject to the protruding electrode configuration. That is, by configuring the protruding electrode configuration into an inclined pattern in two different directions or four or more different directions within one pixel, liquid crystal domains can be formed after applying a driving voltage to the liquid crystals, and the viewing angle can be widened.
(3) The liquid crystal molecules on the color filter substrate side have an initial alignment that is vertical, but an oblique electric field at the time of application of a driving voltage to the liquid crystal molecules can be used in the tilt of the liquid crystal molecules (direction of alignment of the liquid crystals after voltage application).
(4) By adjusting the tilt of the liquid crystals on the color filter substrate side to be in line with the protrusion direction of the protruding electrode configuration, declination of the liquid crystals is decreased, and also, a high-speed liquid crystal display with a high transmittance is enabled.

The movement and action of the liquid crystals described above are common in the embodiments described above and in the Examples that will be described below.

In the embodiment described above, the relative permittivity of the color layer is a relative important characteristic; however, since the relative permittivity is almost definitely determined by the ratio of the organic pigment that is added as a coloring agent with respect to the transparent resin (color reproduction as a color filter), it is difficult to greatly change the relative permittivity of the color layer. In other words, the kind or content of the organic pigment in the color layer is set based on the color purity required for a liquid crystal display device, and accordingly, the relative permittivity of the color layer is also almost determined. Meanwhile, the relative permittivity can be adjusted to 4 or greater by increasing the ratio of the organic pigment and thereby reducing the color layer into a thin film. Furthermore, the relative permittivity can be slightly increased by using a high refractive index material as the transparent resin. The relative permittivity of a color layer that uses an organic pigment falls approximately in the range of from 2.9 to 4.5.

The relative permittivity of the color layer or light shielding layer in the Examples that will be described below was measured by using an Impedance Analyzer Model 1260 manufactured by Solartron ISA under the conditions of a voltage of 3 V at frequencies of 120, 240 and 480 Hz. The measurement sample is a product obtained by applying and curing a color layer or a light shielding layer (the film thickness is the same as that used in Examples that will be described below) above a glass substrate on which a conductive film formed from an aluminum thin film has been formed patternwise, and a conductive film pattern formed from an aluminum thin film is formed on this color layer. Hereinafter, the relative permittivity of the color layer may be referred to as a relative permittivity of a color pixel.

In regard to the relative permittivity of a color pixel of the color filter, in order to avoid color unevenness or light leakage in the liquid crystal display, the difference in the values of relative permittivity between color pixels of different colors can be adjusted to ±0.3. In a liquid crystal display device in the driving mode according to the present invention or a Fringe-Field Switching (FFS) mode, if the difference in the relative permittivity between color pixels is larger than 0.8 or 1.0, color unevenness or light leakage in the liquid crystal display may occur.

As will be described in detail in the Examples given below, the inventors of the present invention conducted an investigation and found that the relative permittivity of a color pixel can be suppressed to 4.4 or less by means of the selection of an organic pigment as a coloring agent, and the selection of the pigment proportion, and materials other than the resin or the dispersant material for the parent material. As will be described below, for the organic pigment for a green pixel, a halogenated zinc phthalocyanine green pigment is preferred to a halogenated copper phthalocyanine green pigment. When the latter is used as a primary coloring agent for a green pixel, the relative permittivity of the green pixel can be made small, and it is easy to make the relative permittivity of the green pixel even with the values of the relative permittivity of a red pixel and a blue pixel. Alternatively, in the case where the rise of liquid crystals during liquid crystal driving is faster on the shorter wavelength light side (blue pixel) and slower on the longer wavelength light side (red pixel), the magnitudes of the relative permittivity of color pixels can be adjusted in order of the wavelength of light.

Meanwhile, using a halogenated zinc phthalocyanine green pigment as a primary coloring material for a green pixel means that in the case of using two or more pigments as a mixture, the amount of addition of the halogenated zinc phthalocyanine green pigment is the largest.

Furthermore, conditions that do not impede the liquid crystal driving can be provided by making the values of the relative permittivity of the color filter constituent members to be smaller than the value of dielectric constant anisotropy Δε of the liquid crystal used in a liquid crystal display device. For the formation of color pixels of the color filter, photosensitive acrylic resins are usually used. In general, the relative permittivities of transparent resins such as acrylic resins are approximately close to 2.8. As the inventors of the present invention conducted a study, they found that the lower limit of the relative permittivity of color pixels, which are dispersion systems of organic pigments, is approximately 2.9. In regard to the light shielding layer used in the formation of the black matrix, the relative permittivity value thereof can be set to 6 or greater, for example 16, by adjusting the amount of addition of carbon as a black coloring agent to the transparent resin. When the coloring agents used in the light shielding layer are all selected from organic pigments, the relative permittivity values can be adjusted to small values of 4.4 or less.

In a liquid crystal display device in an In-Plane Switching (IPS) mode or an FFS mode, which are both representative modes for liquid crystal driving with high contrast and a wide viewing angle, a liquid crystal having dielectric constant anisotropy values of approximately 4.5 is frequently used for the purpose of high speed response, or in order to decrease the threshold value of the driving voltage. In the case of applying these liquid crystals to the embodiments of the present invention, the relative permittivity of the color layer or the transparent resin layer in the color filter configuration is desirably 4.4 or less. At least, if the relative permittivity of the color layer or the transparent resin layer is equal to the value of dielectric constant anisotropy of the liquid crystal in use, a color filter which poses less hindrance on the formation of an electric field between the first electrode and the third electrode can be provided. In the case of a liquid crystal having vertical orientation and negative dielectric constant anisotropy, since reliability is affected depending on the driving conditions, a liquid crystal having an absolute value of the dielectric constant anisotropy of 3.8 or less may be selected. The relative permittivity of the color layer or transparent resin layer in the color filter configuration of the present invention is more preferably 3.8 or less. In addition, when a resin material having a low relative permittivity is used for the first and second transparent resin layers, the apparent relative permittivity as a pixel of a color filter can be made lower than that of the simple material of a color layer.

Hereinafter, examples of transparent resins, organic pigments and the like that can be used in the color filter substrate according to the embodiments discussed above will be described.

### (Transparent resin)

The photosensitive color composition used in the formation of the light shielding layer or the color layer further contains, in addition to the pigment dispersion, a polyfunctional monomer, a photosensitive resin, a non-photosensitive resin, a polymerization initiator, a solvent, and the like. Highly transparent organic resins that can be used in the embodiments of the present invention, such as photosensitive resins and non-photosensitive resins, are collectively called transparent resin.

Transparent resins include thermoplastic resins, thermosetting resins, and photosensitive resins. Examples of the thermoplastic resins include a butyral resin, a styrene-maleic acid copolymer, a chlorinated polyethylene, chlorinated polypropylene, polyvinyl chloride, a vinyl chloride-vinyl acetate copolymer, a polyvinyl acetate, a polyurethane-based resin, a polyester resin, an acrylic resin, an alkyd resin, a polystyrene resin, a polyamide resin, a rubber-based resin, a cyclized rubber-based resin, a cellulose, polybutadiene, polyethylene, polypropylene, and a polyimide resin. Furthermore, examples of the thermosetting resins include an epoxy resin, a benzoguanamine resin, a rosin-modified maleic acid resin, a rosin-modified fumaric acid resin, a melamine resin, a urea resin, and a phenolic resin. Regarding the thermosetting resin, a product produced by allowing a melamine resin to react with a compound containing an isocyanate group, may also be used.

### (Alkali-soluble resin)

In the formation of a light shielding layer, a light scattering layer, a color layer, and a cell gap control layer that are used in the embodiments described above, it is preferable to use a photosensitive resin composition capable of forming a pattern by photolithography. The transparent resin contained in this photosensitive resin composition is desirably a resin imparted with alkali solubility. The alkali-soluble resin is not particularly limited as long as it is a resin containing a carboxyl group or a hydroxyl group. Examples thereof include an epoxy acrylate-based resin, a novolac-based resin, a polyvinylphenol-based resin, an acrylic resin, a carboxyl group-containing epoxy resin, and a carboxyl group-containing urethane resin. Among them, an epoxy acrylate-based resin, a novolac-based resin, and an acrylic resin are preferred, and particularly, an epoxy acrylate-based resin or a novolac-based resin is preferred.

### (Acrylic resin)

Representative examples of the transparent resins that can be employed in the above embodiments include the following acrylic resins.

Examples of the acrylic resin include polymers obtained by using, as monomers, (meth)acrylic acid; alkyl (meth)acrylates such as methyl (meth)acrylate, ethyl (meth)acrylate, propyl (meth)acrylate, butyl (meth)acrylate, t-butyl (meth)acrylate, pentyl (meth)acrylate, and lauryl (meth)acrylate; hydroxyl group-containing (meth)acrylates such as hydroxyethyl (meth)acrylate and hydroxypropyl (meth)acrylate; ether group-containing (meth)acrylates such as ethoxyethyl (meth)acrylate and glycidyl (meth)acrylate; and alicyclic (meth)acrylates such as cyclohexyl (meth)acrylate, isobornyl (meth)acrylate, and dicyclopentenyl (meth)acrylate.

Meanwhile, the monomers listed above can be used singly, or two or more kinds can be used in combination. Furthermore, copolymers with compounds capable of copolymerizing with these monomers, such as styrene, cyclohexylmaleimide and phenylmaleimide, may also be used.

Furthermore, a resin having photosensitivity can be obtained by allowing, for example, a copolymer obtained by copolymerizing a carboxylic acid having an ethylenically unsaturated group, such as (meth)acrylic acid, to react with a compound containing an epoxy group and an unsaturated double bond, such as glycidyl methacrylate; or adding a carboxylic acid-containing compound such as (meth)acrylic acid to a polymer of an epoxy group-containing (meth)acrylate such as glycidyl methacrylate, or a copolymer thereof with another (meth)acrylate.

Furthermore, a resin having photosensitivity can be obtained by allowing, for example, a polymer having hydroxyl groups, of a monomer such as hydroxyethyl methacrylate, to react with a compound having an isocyanate group and an ethylenically unsaturated group, such as methacryloyloxyethyl isocyanate.

Furthermore, as described above, a resin having carboxyl groups can be obtained by allowing a copolymer of hydroxyethyl methacrylate or the like, having plural hydroxyl groups, to react with a polybasic acid anhydride, and introducing carboxyl groups into the copolymer. The method for producing a resin having carboxyl groups is not intended to be limited to this method only.

Examples of the acid anhydride used in the reaction described above include, for example, malonic anhydride, succinic anhydride, maleic anhydride, itaconic anhydride, phthalic anhydride, tetrahydrophthalic anhydride, hexahydrophthalic anhydride, methyltetrahydrophthalic anhydride, and trimellitic anhydride.

The solid component acid value of the acrylic resin described above is preferably 20 mg KOH/g to 180 mg KOH/g. If the acid value is less than 20 mg KOH/g, the development rate of the photosensitive resin composition is so slow that the time required for development increases, and thus productivity tends to deteriorate. Furthermore, if the solid component acid value is larger than 180 mg KOH/g, on the contrary, the development rate is so fast that inconveniences such as peeling of the pattern and chipping of the pattern after development tend to occur.

Furthermore, when the acrylic resin has photosensitivity, the double bond equivalent of this acrylic resin is preferably 100 or greater, more preferably 100 to 2000, and most preferably 100 to 1000. If the double bond equivalent is greater than 2000, sufficient photocurability may not be obtained.

### (Photopolymerizable monomer)

Examples of the photopolymerizable monomer include various acrylic acid esters and methacrylic acid esters such as 2-hdyroxyethyl (meth)acrylate, 2-hydroxypropyl (meth)acrylate, cyclohexyl (meth)acrylate, polyethylene glycol di(meth)acrylate, pentaerythritol tri(meth)acrylate, trimethylolpropane tri(meth)acrylate, dipentaerythritol hexa(meth)acrylate, tricyclodecanyl (meth)acrylate, melamine (meth)acrylate, and epoxy (meth)acrylate; (meth)acrylic acid, styrene, vinyl acetate, (meth)acrylamide, N-hydroxymethyl (meth)acrylamide, and acrylonitrile.

Furthermore, it is preferable to use a polyfunctional urethane acrylate having (meth)acryloyl group, which is obtainable by allowing (meth)acrylate having a hydroxyl group to react with a polyfunctional isocyanate. Meanwhile, the combination of (meth)acrylate having a hydroxyl group and a polyfunctional isocyanate is arbitrary, and is not particularly limited. Furthermore, one kind of a polyfunctional urethane acrylate may be used alone, or two or more kinds may also be used in combination.

### (Photopolymerization initiator)

Examples of the photopolymerization initiator include acetophenone-based compounds such as 4-phenoxydichloroacetophenone, 4-t-butyldichloroacetophenone, diethoxyacetophenone, 1-(4-isopropylphenyl)-2-hydroxy-2-methylpropan-1-one, 1-hydroxycyclohexyl phenyl ketone, and 2-benzyl-2-dimethylamino-1-(4-morpholinophenyl)-butan-1-one; benzoin-based compounds such as benzoin, benzoin methyl ether, benzoin ethyl ether, benzoin isopropyl ether, and benzyl dimethyl ketal; benzophenone-based compounds such as benzophenone, benzoylbenzoic acid, methyl benzoylbenzoate, 4-phenylbenzophenone, hydroxybenzophenone, acrylated benzophenone, and 4-benzoyl-4'-methyldiphenyl sulfide; thioxanthone-based compounds such as thioxanthone, 2-chlorothioxanthone, 2-methylthioxanthone, isopropylthioxanthone, and 2,4-diisopropylthioxanthone; triazine-based compounds such as 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-biphenyl-4,6-bis(trichloromethyl)-s-triazine, 2,4-bis(trichloromethyl)-6-styryl-s-triazine, 2-(naphth-1-yl)-4,6-bis(trichloromethyl)-s-triazine, 2-(4-methoxynaphth-1-yl)-4,6-bis(trichloromethyl)-s-triazine, 2,4-trichloromethyl-(piperonyl)-6-triazine, and 2,4-trichloromethyl(4'-methoxystyryl)-6-triazine; oxime ester-based compounds such as 1,2-octanedione, 1-[4-(phenylthio)-,2-(O-benzoyloxime)], and O-(acetyl)-N-(1-phenyl-2-oxo-2-(4'-methoxynaphthyl)ethylidene)hydroxylamine; phosphine-based compounds such as bis(2,4,6-trimethylbenzoyl)phenylphosphine oxide and 2,4,6-trimethylbenzoyldiphenylphosphine oxide; quinone-based compounds such as 9,10-phenanthrenequinone, camphorquinone, and ethylanthraquinone; borate-based compounds; carbazole-based compounds; imidazole-based compounds; and titanocene-based compounds. For an enhancement of sensitivity, oxime derivatives (oxime-based compounds) are effective. These can be used singly, or two or more kinds can be used in combination.

### (Sensitizer)

The photopolymerization initiator is preferably used in combination with a sensitizer. As the sensitizer, compounds such as α-acyloxy ester, acylphosphine oxide, methylphenyl glyoxylate, benzyl-9,10-phenanthrenequinone, camphor-quinone, ethylanthraquinone, 4,4'-diethylisophthalophenone, 3,3',4,4'-tetra(t-butylperoxycarbonyl)benzophenone, and 4,4'-diethylaminobenzophenone can be used in combination.

The sensitizer can be incorporated in an amount of from 0.1 parts by mass to 60 parts by mass relative to 100 parts by mass of the photopolymerization initiator.

### (Ethylenically unsaturated compound)

The photopolymerization initiator described above is preferably used together with an ethylenically unsaturated compound. An ethylenically unsaturated compound means a compound having one or more ethylenically unsaturated bonds in the molecule. Among others, a compound having two or more ethylenically unsaturated bonds in the molecule is preferred from the viewpoints of polymerizability, crosslinkability, and the consequent possibility to increase the difference in the developing liquid solubility between an exposed area and a non-exposed area. Furthermore, a (meth)acrylate compound in which the unsaturated bond originates from a (meth)acryloyloxy group is particularly preferred.

Examples of the compound having one or more ethylenically unsaturated bonds in the molecule include unsaturated carboxylic acids such as (meth)acrylic acid, crotonic acid, isocrotonic acid, maleic acid, itaconic acid and citraconic acid, and alkyl esters thereof; (meth)acrylonitrile; (meth)acrylamide; and styrene. Representative examples of the compound having two or more ethylenically unsaturated bonds in the molecule include esters between unsaturated carboxylic acids and polyhydroxy compounds, (meth)acryloyloxy group-containing phosphates, urethane (meth)acrylates between hydroxyl(meth)acrylate compounds and polyisocyanate compounds, and epoxy (meth)acrylates between (meth)acrylic acid or hydroxy(meth)acrylate compounds and polyepoxy compounds.

The photopolymerizable initiator, sensitizer and ethylenically unsaturated compound may be added to a composition containing a polymerizable liquid crystal compound used in the formation of a retardation layer that will be described below.

### (Polyfunctional thiol)

In the photosensitive color composition, a polyfunctional thiol that functions as a chain transfer agent can be incorporated. The polyfunctional thiol may be a compound having two or more thiol groups, and examples thereof include hexanedithiol, decanedithiol, 1,4-butanediol bisthiopropionate, 1,4-butanediol bisthioglycolate, ethylene glycol bisthioglycolate, ethylene glycol bisthiopropionate, trimethylolpropane tristhioglycolate, trimethylolpropane tristhiopropionate, trimethylolpropane tris(3-mercaptobutyrate), pentaerythritol tetrakisthioglycolate, pentaerythritol tetrakisthiopropionate, trimercaptopropionic acid tris(2-hydroxyethyl)isocyanurate, 1,4-dimethylmercaptobenzene, 2,4,6-trimercapto-s-triazine, and 2-(N,N-dibutylamino)-4,6-dimercapto-s-triazine.

Such polyfunctional thiols can be used singly or as mixtures of two or more kinds. The polyfunctional thiol can be used in an amount of preferably 0.2 parts to 150 parts by mass, and more preferably 0.2 parts to 100 parts by mass, relative to 100 parts by mass of the pigment.

### (Storage stabilizer)

In the photosensitive color composition, a storage stabilizer can be incorporated in order to stabilize the viscosity of the composition over time. Examples of the storage stabilizer include benzyltrimethyl chloride; quaternary ammonium chlorides such as diethylhydroxyamine; organic acids such as lactic acid and oxalic acid, and methyl ethers thereof; organic phosphines such as t-butylpyrocatechol, triethylphosphine, and triphenylphosphine; and phosphorous acid salts.

### (Adhesion enhancing agent)

In the photosensitive color composition, an adhesion enhancing agent such as a silane coupling agent can be incorporated in order to increase the adhesiveness to a substrate.

### (Solvent)

In the photosensitive color composition, a solvent such as water or an organic solvent is incorporated in order to enable uniform application on a substrate. Furthermore, when the composition used in the present embodiment is a color layer of a color filter, the solvent also has a function of uniformly dispersing the pigment. Examples of the solvent include cyclohexanone, ethylcellosolve acetate, butylcellosolve acetate, 1-methoxy-2-propyl acetate, diethylene glycol dimethyl ether, ethylbenzene, ethylene glycol diethyl ether, xylene, ethylcellosolve, methyl n-amyl ketone, propylene glycol monomethyl ether, toluene, methyl ethyl ketone, ethyl acetate, methanol, ethanol, isopropyl alcohol, butanol, isobutyl ketone, and petroleum-based solvents. These can be used singly or as mixtures. The solvent can be incorporated in an amount of from 800 parts to 4000 parts by mass, and preferably from 1000 parts to 2500 parts, relative to 100 parts by mass of the pigment.

### (Organic pigment)

Examples of red pigments that can be used include C.I. Pigment Red 7, 9, 14, 41, 48:1, 48:2, 48:3, 48:4, 81:1, 81:2, 81:3, 97, 122, 123, 146, 149, 168, 177, 178, 179, 180, 184, 185, 187, 192, 200, 202, 208, 210, 215, 216, 217, 220, 223, 224, 226, 227, 228, 240, 242, 246, 254, 255, 264, 272, and 279.

Examples of yellow pigments include C.I. Pigment Yellow 1, 2, 3, 4, 5, 6, 10, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 77, 81, 83, 86, 93, 94, 95, 97, 98, 100, 101, 104, 106, 108, 109, 110, 113, 114, 115, 116, 117, 118, 119, 120, 123, 125, 126, 127, 128, 129, 137, 138, 139, 144, 146, 147, 148, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 213, and 214.

Examples of blue pigments that can be used include C.I. Pigment Blue 15, 15:1, 15:2, 15:3, 15:4, 15:6, 16, 22, 60, 64, and 80, and among these, C.I. Pigment Blue 15:6 is preferred.

Examples of violet pigments that can be used include C.I. Pigment Violet 1, 19, 23, 27, 29, 30, 32, 37, 40, 42, and 50, and among these, C.I. Pigment Violet 23 is preferred.

Examples of green pigments that can be used include C.I. Pigment Green 1, 2, 4, 7, 8, 10, 13, 14, 15, 17, 18, 19, 26, 36, 45, 48, 50, 51, 54, 55, and 58, and among these, C.I. Pigment Green 58 which is a halogenated zinc phthalocyanine green pigment is preferred.

Hereinafter, in regard to the description of pigment kinds of the C.I. Pigments, the pigments may be simply described in abbreviations such as PB (Pigment Blue), PV (Pigment Violet), PR (Pigment Red), PY (Pigment Yellow), and PG (Pigment Green).

### (Coloring material of light shielding layer)

The light shielding coloring material that is included in the light shielding layer or the black matrix is a coloring material which exhibits a light shielding function by having absorption in the visible light wavelength region. Examples of the light shielding coloring material in the present embodiment include organic pigments, inorganic pigments, and dyes. Examples of the inorganic pigments include carbon black and titanium oxide. Examples of the dyes include azo-based dyes, anthraquinone-based dyes, phthalocyanine-based dyes, quinoneimine-based dyes, quinoline-based dyes, nitro-based dyes, carbonyl-based dyes, and methine-based dyes. In regard to the organic pigments, those organic pigments described above can be employed. Meanwhile, regarding the light shielding components, one kind may be used, or two or more kinds may be used together in any arbitrary combinations and ratios. Furthermore, an increase in volume resistivity caused by resin coating of the surfaces of these coloring materials, or on the contrary, a decrease in volume resistivity caused by imparting slight conductivity by increasing the content ratio of the coloring material with respect to the parent material of the resin, may be carried out. However, since the volume resistivity value of such a light shielding material is approximately in the range of 1 × 10⁸ to 1 × 10¹⁵ Ω·cm, the volume resistivity value is not at a level of affecting the resistivity value of the transparent conductive film. Similarly, the relative permittivity of the light shielding layer can also be adjusted to the range of 3 to 11 by means of the selection or content ratio of the coloring material. The relative permittivities of the light shielding layer, the first transparent resin layer, and the color layer can be adjusted according to the design conditions for the liquid crystal display device, or the conditions for driving the liquid crystals.

### (Dispersant/dispersion aid)

When a polymer dispersant is used as a pigment dispersant, it is preferable because dispersion stability over time is excellent. Examples of the polymer dispersant include a urethane-based dispersant, a polyethyleneimine-based dispersant, a polyoxyethylene alkyl ether-based dispersant, a polyoxyethylene glycol diester-based dispersant, a sorbitan aliphatic ester-based dispersant, and an aliphatic-modified polyester-based dispersant. Among them, particularly, a dispersant formed from a graft copolymer containing nitrogen atoms is preferred for the light shielding photosensitive resin composition used in the present embodiment containing a large amount of a pigment, from the viewpoint of developability.

Specific examples of these dispersants include, as listed under product names, EFKA (manufactured by EFKA BV), DISPERBYK (manufactured by BYK Chemie GmbH), DISPARLON (manufactured by Kusumoto Chemicals, Ltd.), SOLSPERSE (manufactured by Lubrizol, Inc.), KP (manufactured by Shin-Etsu Chemical Co., Ltd.), and POLYFLOW (manufactured by Kyoeisha Chemical Co., Ltd.). These dispersants may be used singly, or two or more kinds can be used together in arbitrary combinations and ratios.

Regarding a dispersion aid, for example, a colorant derivative and the like can be used. Examples of the colorant derivative include azo-based, phthalocyanine-based, quinacridone-based, benzimidazolone-based, quinophthalone-based, isoindolinone-based, dioxazine-based, anthraquinone-based, indanthrene-based, perylene-based, perinone-based, diketopyrrolopyrrole-based, and dioxazine-based derivatives, but among these, quinophthalone-based colorant derivatives are preferred.

Regarding the substituent of the colorant derivative, for example, a sulfonic acid group, a sulfonamide group and quaternary salts thereof, a phthalimidomethyl group, a dialkylaminoalkyl group, a hydroxyl group, a carboxyl group, an amide group and the like being bonded to the pigment skeleton directly or through an alkyl group, an aryl group, a heterocyclic group or the like, may be used. Among these, a sulfonic acid group is preferred. Regarding these substituents, plural substituents may be substituted in one pigment skeleton.

Specific examples of the colorant derivative include sulfonic acid derivatives of phthalocyanine, sulfonic acid derivatives of quinophthalone, sulfonic acid derivatives of anthraquinone, sulfonic acid derivatives of quinacridone, sulfonic acid derivatives of diketopyrrolopyrrole, and sulfonic acid derivatives of dioxazine.

The dispersion aids and colorant derivatives described above may be used singly, or two or more kinds may be used together in any arbitrary combinations and ratios.

Hereinafter, various Examples of the present invention will be described.

### [Example 1]

A color filter substrate 10 as illustrated in FIG. 1 was produced in the following manner.

### [Formation of black matrix]

### (Black matrix-forming dispersion liquid)

20 parts by mass of carbon pigment #47 (manufactured by Mitsubishi Chemical Corp.), 8.3 parts by mass of polymer dispersant BYK-182 (manufactured by BYK Chemie GmbH), 1.0 part by mass of a copper phthalocyanine derivative (manufactured by Toyo Ink Manufacturing Co., Ltd.), and 71 parts by mass of propylene glycol monomethyl ether acetate were stirred in a bead mill dispersing machine, and thus a carbon black dispersion liquid was prepared.

### (Black matrix-forming photoresist)

As a material for the liquid shielding layer, a black matrix-forming resist 1 was prepared by using the following materials.

Carbon black dispersion liquid: Pigment #47 (manufactured by Mitsubishi Chemical Corp.)

Transparent resin: V259-ME (manufactured by Nippon Steel Chemical Co., Ltd.) (solids content: 56.1% by mass)

Photopolymerizable monomer: DPHA (manufactured by Nippon Kayaku Co., Ltd.)

Initiator: OXE-02 (manufactured by Ciba Specialty Chemicals Corp.)

OXE-01 (manufactured by Ciba Specialty Chemicals Corp.)

Solvent: Propylene glycol monomethyl ether acetate Ethyl 3-ethoxypropionate

Leveling agent: BYK-330 (manufactured by BYK Chemie GmbH)

The above materials were mixed and stirred at the following composition ratio, and thus a black matrix-forming resist 1 (pigment concentration in the solids content: about 20%) was obtained.

| | |
|---|---|
| Carbon black dispersion liquid | 3.0 parts by mass |
| Transparent resin | 1.4 parts by mass |
| Photopolymerizable monomer | 0.4 parts by mass |
| Photopolymerization initiator OXE-01 | 0.67 parts by mass |
| Photopolymerization initiator OXE-02 | 0.17 parts by mass |
| Propylene glycol monomethyl ether acetate | 14 parts by mass |
| Ethyl 3-ethoxypropionate | 5.0 parts by mass |
| Leveling agent | 1.5 parts by mass |

### (Conditions for forming black matrix)

The black matrix-forming resist 1 was spin coated on a transparent substrate 1 which was an alkali-free glass plate, and the resist was dried. Thus, a coating film having a film thickness of 1.5 µm was produced. Such a coating film was dried for 3 minutes at 100°C, and then was irradiated at a dose of 200 mJ/cm² by using a photomask for exposure having openings with a pattern width of the black matrix (corresponding to the image line width of the black matrix) of 24.5 µm, and using an ultrahigh pressure mercury lamp as a light source.

Next, the pattern was developed with a 2.5% aqueous solution of sodium carbonate for 60 seconds, and after development, the pattern was thoroughly washed with water and was further dried. Subsequently, the pattern was heat treated for 60 minutes at 230°C to cure, and thus a black matrix 5 was formed. The image line width of the black matrix 5 was about 24 µm, and the image lines were formed along the periphery of a rectangular pixel (four sides). The angle of inclination of an edge of the black matrix image line from the surface of the transparent conductive film was adjusted to about 45 degrees.

### (Formation of transparent conductive film)

Subsequently, a transparent conductive film 3 (third electrode) formed from ITO (a metal oxide thin film of indium and tin) was formed to have a film thickness of 0.14 µm by using a sputtering apparatus.

### [Formation of second transparent resin layer]

### (Synthesis of resin A)

In a separable flask, 686 parts by mass of propylene glycol monomethyl ether acetate, 332 parts by mass of glycidyl methacrylate, and 6.6 parts by mass of azobisisobutyronitrile were introduced, and the mixture was heated for 6 hours at 80°C in a nitrogen atmosphere. Thus, a resin solution was obtained.

Next, 168 parts by mass of acrylic acid, 0.05 parts by mass of methoquinone, and 0.5 parts by mass of triphenylphosphine were added to the resin solution thus obtained, and the mixture was heated for 24 hours at 100°C while air was blown. Thus, an acrylic acid-added resin solution was obtained.

Furthermore, 186 parts by mass of tetrahydrophthalic anhydride was added to the acrylic acid-added resin solution thus obtained, and the mixture was heated for 10 hours at 70°C. Thus, a resin A solution was obtained.

### (Preparation of photosensitive resin liquid A)

A negative type photosensitive resin liquid A at the following composition was prepared.

| | |
|---|---|
| Resin A | 200 parts by mass |
| Photopolymerizable monomer | |
| Dipentaerythritol hexaacrylate | 20 parts by mass |
| Photopolymerization initiator anufactured by Ciba Specialty | (m10 parts by mass Chemicals Corp., IRGACURE 907) |
| Solvent (propylene glycol monomethyl ether acetate) | 280 parts by mass |

A second transparent resin layer 8 was formed by a known photolithographic technique, by using the photosensitive resin solution A, and a photomask having the pattern (openings) of the second transparent resin layer. The film thickness of the second transparent resin layer 8 was adjusted to 1.3 µm, and the second transparent resin layer 8 was formed to have a line width of 20 µm, at the center of the pixel and along the longitudinal direction of the opening of the black matrix.

### [Formation of color pixel]

### «Color layer-forming dispersion liquid»

As the organic pigments that were dispersed in the color layers, the following pigments were used.

Pigment for red: C.I. Pigment Red 254 ("IRGA FOR RED B-CF" manufactured by Ciba Specialty Chemicals Corp.), C.I. Pigment Red 177 ("CHROMOPHTAL RED A2B" manufactured by Ciba Specialty Chemicals Corp.)

Pigment for green: C.I. Pigment Green 58 (manufactured by DIC, Inc.), C.I. Pigment Yellow 150 ("FANCHON FAST YELLOW Y-5688" manufactured by Bayer AG)

Pigment for blue: C.I. Pigment Blue 15 ("LIANOL BLUE ES" manufactured by Toyo Ink Manufacturing Co., Ltd.)

### C.I. Pigment Violet 23 ("VARIOGEN VIOLET 5890" manufactured by BASF SE)

Dispersion liquids for the respective colors of red, green and blue were prepared by using the pigments described above.

### <Red dispersion liquid>

| | |
|---|---|
| Red pigment: C.I. Pigment Red 254 | 18 parts by mass |
| Red pigment: C.I. Pigment Red 177 | 2 parts by mass |
| Acrylic varnish (solid content: 20% by mass) | 108 parts by mass |

The mixture of the foregoing composition was uniformly stirred, subsequently dispersed with a sand mill for 5 hours by using glass beads, and filtered through a 5-µm filter. Thus, a red pigment dispersion liquid was prepared.

### <Green dispersion liquid>

| | |
|---|---|
| Green pigment: C.I. Pigment Green 58 | 16 parts by mass |
| Green pigment: C.I. Pigment Yellow 150 | 8 parts by mass |
| Acrylic varnish (solids content: 20% by mass) | 102 parts by mass |

A green pigment dispersion liquid was prepared from the mixture of the foregoing composition, by using the same preparation method as that used for the red pigment dispersion liquid.

### <Blue dispersion liquid>

| | |
|---|---|
| Blue pigment: C.I. Pigment Blue 15 | 50 parts by mass |
| Blue pigment: C.I. Pigment Violet 23 | 2 parts by mass |
| Dispersant ("SOLSPERSE 20000" manufactured by Zeneca Group PLC) | 6 parts by mass |
| Acrylic varnish (solids content: 20% by mass) | 200 parts by mass |

A blue pigment dispersion liquid was prepared from the mixture of the foregoing composition, by using the same preparation method as that used for the red pigment dispersion liquid.

### <<Formation of color pixels>>

Color layers were formed by using color resists for forming color pixels of the mixing compositions indicated in the following Table 1.

**Table 1**

| Color resist | For red pixels | For green pixels | For blue pixels |
|---|---|---|---|
| Pigment dispersion liquid | Red dispersion liquid | Green dispersion liquid | Blue dispersion liquid |
| (mass parts) | 42.5 | 43.5 | 35 |
| Acrylic resin solution | 6.7 | 5.7 | 14.2 |
| Monomer | 4.0 | 4.8 | 5.6 |
| Photopolymerization initiator | 3.4 | 2.8 | 2.0 |
| Sensitizer | 0.4 | 0.2 | 0.2 |
| Organic solvent | 43.0 | 43.0 | 43.0 |
| Total | 100 | 100 | 100 |

In regard to the formation of color layers, first, as illustrated in FIG. 1, a color resist for forming red pixels was applied by spin coating on the substrate 1 having the black matrix 5, the transparent conductive film 3, and the second transparent resin layer 8 formed thereon, such that the finished film thickness would be 2.5 µm. The color resist was dried for 5 minutes at 90°C, and then was irradiated through a photomask for forming color pixels with the light of a high pressure mercury lamp at an exposure dose of 300 mJ/cm². The color resist was developed for 60 seconds with an alkali developing liquid, and thus stripe-shaped color pixels 15 of red were formed on the pixel region so as to overlap with the second transparent resin layer 8. Thereafter, the color resist was baked at 230°C for 30 minutes.

Meanwhile, as the photomask, a photomask provided with half-tone sections at the positions corresponding to the second transparent resin layer 8 was used, such that the film thickness of the thin color layer on the second transparent resin layer 8 would become approximately 1.3 µm after exposure and development, and the entire pixel would become roughly flat after film curing. For the photomasks for forming green pixels and blue pixels as described below, similarly, photomasks provided with half-tone sections in the midsection of the pixels.

Next, the resist for forming green pixels was also applied by spin coating in the same manner such that the finished film thickness would be 2.5 µm, and the resist for forming green pixels would cover the second transparent resin layer 8. The resist was dried for 5 minutes at 90°C, and then was exposed through a photomask and developed so that a pattern would be formed at positions adjacent to the red pixels 15. Thus, green pixels 14 were formed. Meanwhile, the production of the color filter substrate, including the present Example, was carried out by using a well known photolithographic technology.

Furthermore, a resist for forming blue pixels was also completed in the same manner as in the case of red and green pixels, and blue pixels 16 having a film thickness of 2.5 µm and positioned adjacent to the red pixels and the green pixels were obtained. Thereby, color pixels of three colors, namely, red, green and blue, were formed on the substrate 1. Thereafter, the assembly was subjected to a heat treatment at 230°C for 30 minutes to cure the films. [Formation of first transparent resin layer]

### (Synthesis of resin B)

In a 1-liter five-necked flask, 75 g of n-butyl methacrylate, 30 g of methacrylic acid, 25 g of 2-hydroxyethyl methacrylate, and 300 g of propylene glycol monomethyl ether acetate were introduced, and 2 g of AIBN was added thereto in a nitrogen atmosphere. The mixture was allowed to react for 8 hours at 80°C to 85°C. Furthermore, the reaction mixture was prepared with propylene glycol monomethyl ether acetate so that the non-volatile component fraction of this resin would be 20% by mass, and thus a solution of resin B (alkali-soluble resin B) was obtained.

### (Resin coating liquid B)

The following material was prepared as a resin coating liquid B for forming the first transparent resin layer.

32 g of cyclohexanone and 38 g of diethylene glycol dimethyl ether were introduced into a sample bottle. While the content was stirred, 13 g of an epoxy resin: ESF-300 (manufactured by Nippon Steel Chemical Co., Ltd.), 7 g of an alicyclic polyfunctional epoxy resin: EHPE3150 (manufactured by Daicel Chemical Industries, Ltd.), and 5 g of an alicyclic epoxy resin: CELLOXIDE 2021P (manufactured by Daicel Chemical Industries, Ltd.) were added to the sample bottle, and the mixture was completely dissolved. Subsequently, 3.0 g of an acid anhydride: trimellitic anhydride was added thereto, and the mixture was sufficiently stirred and dissolved. Subsequently, 1.2 g of a silane coupling agent (S-510 manufactured by Chisso Corp.) and 0.11 g of a surfactant (FLUORAD FC-430 manufactured by Sumitomo 3M, Ltd.) were added thereto, and the resulting mixture was sufficiently stirred. This was filtered, and thus a resin coating liquid B was obtained.

The resin coating liquid B was applied on the color layers 14, 15 and 16, and the assembly was prebaked for 120 seconds at 90°C. The resin coating liquid B was exposed at predetermined areas, developed, and baked for 30 minutes at 230°C, and thereby, a first transparent resin layer 7 was formed. Thus, a color filter substrate 10 was obtained.

The height H of the color layer overlapping section 6, which was an overlapping section of the black matrix 5, transparent conductive film 3, color layers 14, 15 and 16, and the first transparent resin layer 7, was adjusted to 0.7 µm as a difference from the surface of the first transparent resin layer 8 within the pixel. The areas of the transparent conductive film 3 arranged on the black matrix 5 in the present Example can shorten the inter-electrode distance from the first electrode, which is a pixel electrode when used in a liquid crystal display device, and therefore, there is an advantage that the movement of the liquid crystals present between these electrodes can be made faster.

### [Example 2]

In the present Example, a color filter substrate 10 shown in FIG. 2 was produced. The color filer substrate 10 according to the present Example has a configuration in which, as illustrated in FIG. 2, the order of formation of the black matrix 5 and the transparent conductive film 3 is changed, and the materials used herein and the technology related to the process are the same as in Example 1.

At the color layer overlapping section 6 of Example 2, as the black matrix 5 is arranged on the transparent conductive film 3, the inter-electrode distance from the first electrode, which is a pixel electrode when used in a liquid crystal display device, becomes larger as compared with Example 1. However, since the black matrix 5 uses carbon having a high relative permittivity as a coloring agent for the light shielding layer, a decrease in the voltage can be complemented.

### [Example 3]

In the present Example, a color filter substrate 10 illustrated in FIG. 3 was produced.

As illustrated in FIG. 3, a transparent conductive film 3 (third electrode) formed from ITO (a metal oxide thin film of indium and tin) was formed to have a film thickness of 0.14 µm in an amorphous state at room temperature, on a transparent substrate 1 which was an alkali-free glass plate, by using a sputtering apparatus. The amorphous ITO film formed at room temperature can easily form a fine pattern.

Subsequently, slits 18 each having a width of 8 µm were formed in the ITO film by a known photolithographic technique, by using a photomask having a line-shaped light shielding pattern having a line width of 9 µm in the longitudinal direction at the center of the pixels. The slit 18 is a pattern of opening where an ITO film is not formed. Meanwhile, the slits in the ITO film can also be formed by direct processing using a laser light of high intensity.

Next, a black matrix 5 was formed by using the black matrix-forming resist 2 described below, and subsequently, color layers 14, 15 and 16 were formed by using the color resists described below. A first transparent resin layer 7 was further formed by using the same material as that used in Example 1, and thus the color filter substrate 10 illustrated in FIG. 3 was obtained.

### [Preparation of carbon black dispersion liquid]

A mixture of the composition described below was uniformly stirred and mixed, and then the mixture was stirred with a bead mill dispersing machine. Thus, a carbon black dispersion liquid was prepared.

| | |
|---|---|
| Carbon pigment (#47 manufactured by Mitsubishi Chemical Corp.) | 20 parts |
| Dispersant | 8.3 parts |
| ("DISPERBYK-161 manufactured by BYK Chemie GmbH) | |
| Copper phthalocyanine derivative (manufactured by Toyo Ink Manufacturing Co., Ltd.) | 1.0 part |
| Propylene glycol monomethyl ether acetate | 71 parts |

### [Preparation of black matrix-forming resist 2]

A mixture of the composition described below was stirred and mixed to be uniform, and then the mixture was filtered through a filter having a pore size of 5 µm. Thus, a black matrix-forming resist 2 was obtained.

| | |
|---|---|
| Carbon black dispersion liquid | 25.2 parts |
| Acrylic resin solution | 18 parts |
| Dipentaerythritol penta- and hexa-acrylate | |
| ("M-402" manufactured by Toagosei Co., Ltd.) | 5.2 parts |
| Photopolymerization initiator | 1.2 parts |
| ("IRGACURE OXE 02" manufactured by Ciba Geigy Corp.) | |
| Sensitizer | 0.3 parts |
| ("EAB-F" manufactured by Hodogaya Chemical Co., Ltd.) | |
| Leveling agent | 0.1 parts |
| ("DISPERBYK-163" manufactured by BYK Chemie GmbH) | |
| Cyclohexanone | 25 parts |
| Propylene glycol monomethyl ether acetate | 25 parts |

The compositions of the respective dispersion liquids for the resists for forming red pixels, green pixels and blue pixels and the color resists used in the present Example will be described below.

### [Preparation of red pigment 2]

A dispersion of the red pigment 2 was prepared by the same method as that used for the red pigment 1, by using a mixture of the composition described below.

| | |
|---|---|
| Red pigment: C.I. Pigment Red 254 | 11 parts |
| ("IRGA FOR RED B-CF" manufactured by Ciba Specialty Chemicals Corp.) | |
| Red pigment: C.I. Pigment Red 177 | 9 parts |
| ("CHROMOPHTAL RED A2B" manufactured by Ciba Specialty Chemicals Corp.) | |
| Dispersant ("AJISPER PB821" manufactured by Ajinomoto Fine-Techno Co., Inc.) | 2 parts |
| Acrylic varnish (solids content: 20% by mass) | 108 parts |

### [Preparation of red composition 2]

Thereafter, a mixture of the composition described below was stirred and mixed so as to be uniform, and then the mixture was filtered through a filter having a pore size of 5 µm. Thus, a red composition was obtained.

| | |
|---|---|
| Red pigment 2 | 42 parts |
| Acrylic resin solution | 18 parts |
| Dipentaerythritol penta- and hexa-acrylate | 4.5 parts |
| ("M-402" manufactured by Toagosei Co., Ltd.) Photopolymerization initiator | 1.2 parts |
| ("IRGACURE 907" manufactured by Ciba Specialty Chemicals Corp.) | |
| Sensitizer ("EAB-F" manufactured by Hodogaya Chemical Co., Ltd.) | 2.0 parts |
| Cyclohexanone | 32.3 parts |

### [Preparation of green pigment 2]

A dispersion of the green pigment 2 was prepared by the same method as that used for the green pigment 1, by using a mixture of the composition described below.

| | |
|---|---|
| Green pigment: C.I. Pigment Green 58 | |
| ("Phthalocyanine Green A1 10" manufactured by Dainippon Ink & Chemicals, Inc.) | 10.4 parts |
| Yellow pigment: C.I. Pigment Yellow 150 ("E4GN-GT" manufactured by Lanxess AG) | 3.2 parts |
| Yellow pigment: C.I. Pigment Yellow 138 | 7.4 parts |
| Dispersant ("DISPERBYK-163" manufactured by BYK Chemie GmbH) | 2 parts |
| Acrylic varnish (solids content: 20% by mass) | 66 parts |

### [Preparation of green composition 2]

Thereafter, a mixture of the composition described below was stirred and mixed so as to be uniform, and then the mixture was filtered through a filter having a pore size of 5 µm. Thus, a red composition was obtained.

| | |
|---|---|
| Green pigment 2 | 46 parts |
| Acrylic resin solution | 8 parts |
| Dipentaerythritol penta- and hexa-acrylate ("M-402" manufactured by Toagosei Co., Ltd.) | 4 parts |
| Photopolymerization initiator ("IRGACURE OXE 02" manufactured by Ciba Geigy Corp.) | 1.2 parts |
| Photopolymerization initiator ("IRGACURE 907" manufactured by Ciba Specialty Chemicals Corp.) | 3.5 parts |
| Sensitizer ("EAB-F" manufactured by Hodogaya Chemical Co., Ltd.) | 1.5 parts |
| Cyclohexanone | 5.8 parts |
| Propylene glycol monomethyl ether acetate | 30 parts |

### [Preparation of blue pigment 2]

A mixture of the composition described below was uniformly stirred and mixed, and then the mixture was dispersed with a sand mill for 5 hours by using glass beads having a diameter of 1 mm. Subsequently, the dispersion was filtered through a filter having a pore size of 5 µm, and thus a dispersion of a blue pigment was prepared.

Blue pigment: C.I. Pigment Blue 15:6

| | |
|---|---|
| ("LIONOL BLUE ES" manufactured by Toyo Ink Manufacturing Co., Ltd.) | 49.4 parts |
| Dispersant ("SOLSPERSE 20000" manufactured by Zeneca Group PLC) | 6 parts |
| Acrylic varnish (solids content: 20% by mass) | 200 parts |

The violet dye powder described below was added to this dispersion, and the mixture was thoroughly stirred. Thus, a blue pigment 2 was obtained.

| | |
|---|---|
| Violet dye: NK-9402 (manufactured by Hayashibara Biochemical Laboratories, Inc.) | 2.6 parts |

### [Preparation of blue composition 2]

Thereafter, a mixture of the composition described below was stirred and mixed so as to be uniform, and then the mixture was filtered through a filter having a pore size of 5 µm. Thus, a blue composition was obtained.

| | |
|---|---|
| Blue pigment 2 | 16.5 parts |
| Acrylic resin solution | 25.3 parts |
| Dipentaerythritol penta- and hexa-acrylate ("M-402" manufactured by Toagosei Co., Ltd.) | 1.8 parts |
| Photopolymerization initiator | 1.2 parts |
| ("IRGACURE 907" manufactured by Ciba Specialty Chemicals Corp.) | |
| Sensitizer ("EAB-F" manufactured by Hodogaya Chemical Co., Ltd.) | 0.2 parts |
| Cyclohexanone | 25 parts |
| Propylene glycol monomethyl ether acetate | 30 parts |

### [Relative permittivities of coating films of various colors]

Each of the color resists used in Example 3 and Example 1 was processed into a sample for measuring the relative permittivity (the film thickness of the color coating film was adjusted to 2.8 µm), and the relative permittivity was measured by using an impedance analyzer.

The values of relative permittivity together with the values of measurement frequency are presented in the following Table 2.

**Table 2**

| | | Example 1 | | | Example 3 | | | |
|---|---|---|---|---|---|---|---|---|
| | Measurement frequency | Red layer (R) | Green layer (G) | Blue layer (B) | Red layer (R) | Green layer (G) | Blue layer (B) | Light shielding layer (BM) |
| Relative permittivity | 120 Hz | 3.6 | 3.8 | 3.6 | 3.2 | 3.5 | 3.1 | 16.2 |
| | 240 Hz | 3.5 | 3.7 | 3.6 | 3.2 | 3.4 | 3 | 16.1 |
| | 480 Hz | 3.5 | 3.7 | 3.6 | 3.2 | 3.4 | 3 | 15.5 |

For the pigment of the green resist used in Example 1, Example 2 and Example 3, a halogenated zinc phthalocyanine green pigment (number of bromination: 14.1) was used. Meanwhile, the relative permittivity of a green layer obtained by substituting this pigment with a halogenated copper phthalocyanine green pigment that has been traditionally used is 4.5, which is higher by 0.9 than the relative permittivity of the red layer indicated in the Table 1. Thus, there may be a hindrance in arranging red pixels, green pixels and blue pixels on the third electrode and achieving a uniform color display. When a green pixel having a relative permittivity of 4.5 is used, the electric field is different from the electric field in which the liquid crystal layers of the red pixel and the blue pixel and the liquid crystal layer of the green pixel are different. Therefore, a shift of subtle gradation tends to easily occur at the same liquid crystal driving voltage. As described above, it is preferable to adjust the difference in the relative permittivity of different color pixels to ±0.3 or less with respect to the average relative permittivity of those pixels.

As discussed above, since the color filter substrate according to the present Example is equipped with color layers having uniform relative permittivities for various colors and low relative permittivities on a transparent conductive film which is a third electrode, a uniform electric field can be formed between the first electrode and the third electrode, and the liquid crystal display quality can be enhanced.

The configuration in which the black matrix is formed on the third electrode is preferable from the viewpoint that since the relative permittivity is high, it is easy to apply a voltage to the liquid crystal molecules that are located at the shoulder of the color layer overlapping section 6. The configuration in which the third electrode is laminated on the black matrix as shown in Example 1 is preferable from the viewpoint that the configuration exerts a stronger effect on the liquid crystal molecules located at the shoulder.

### [Example 4]

In the present Example, the color filter substrate 10 illustrated in FIG. 4 was produced as follows.

On a transparent substrate 1 which was an alkali-free glass plate, the black matrix-forming resist used in Example 1 was spin coated and dried, and thus a coating film having a film thickness of 1.5 µm was produced. Such a coating film was dried for 3 minutes at 100°C, and then the coating film was irradiated at a dose of 200 mJ/cm² by using a photomask for exposure having a pattern width of the black matrix (corresponding to the image line width of the black matrix) of 24.5 µm and having openings, and by using an ultrahigh pressure mercury lamp as a light source. After development, the color filter substrate was thoroughly washed with water, further dried, and then heat treated for 60 minutes at 230°C to cure the pattern. Thus, the black matrix 5 was formed on the transparent substrate. Meanwhile, the shape of the opening of the black matrix was made into a polygon having the shape of "symbol <" as shown in FIG. 20B, the image line width of the black matrix 5 was about 24 µm, and the black matrix was formed in the periphery of the openings of the polygonal pixels.

Next, a transparent conductive film 3 (third electrode) formed from ITO (a metal oxide thin film of indium and tin) was formed to have a film thickness of 0.14 µm in an amorphous state at room temperature, on the substrate 1 having the black matrix 5 formed thereon, by using a sputtering apparatus. The amorphous ITO film formed at room temperature has an advantage that a fine pattern can be easily formed.

Next, a slit 18 having the shape of "symbol <" and having a width of 8 µm was formed in the ITO film by a known photolithographic technique, by using a photomask provided with a linear light shielding pattern having the shape of "symbol <" with a width of 9 µm at the center of the pixel in the longitudinal direction. The slit 18 is an opening pattern where an ITO film is not formed.

Next, a pattern having the shape of "symbol <" was formed at a film thickness of 2.8 µm at each of the polygon-shaped openings of the black matrix 5 by a known photolithographic technique by using the red resist, green resist and blue resist used in Example 3.

Furthermore, a first transparent resin layer 7 having a film thickness of 0.7 µm was formed, and thus a color filter substrate 10 was obtained.

### [Example 5]

In the present Example, a color filter substrate 10 illustrated in FIG. 5 was produced as follows.

On a transparent substrate 1 which was an alkali-free glass plate, the black matrix-forming resist used in Example 1 was spin coated and dried, and thus a coating film having a film thickness of 1.5 µm was produced. Such a coating film was dried for 3 minutes at 100°C, and then the coating film was irradiated at a dose of 200 mJ/cm² by using a photomask for exposure having a pattern width of the black matrix (corresponding to the image line width of the black matrix) of 24.5 µm and having openings, and by using an ultrahigh pressure mercury lamp as a light source. After development, the color filter substrate was thoroughly washed with water, further dried, and then heat treated for 60 minutes at 230°C to cure the pattern. Thus, the black matrix 5 was formed on the transparent substrate. Meanwhile, the shape of the opening of the black matrix was made into a polygon having the shape of "symbol <" as shown in FIG. 20B, the image line width of the black matrix 5 was about 24 µm, and the black matrix was formed in the periphery of the openings of the polygonal pixels.

Next, a transparent conductive film 3 (third electrode) formed from ITO (a metal oxide thin film of indium and tin) was formed to have a film thickness of 0.14 µm in an amorphous state at room temperature, on the substrate 1 having the black matrix 5 formed thereon, by using a sputtering apparatus. The amorphous ITO film formed at room temperature has an advantage that a fine pattern can be easily formed.

Next, a slit 18 having the shape of "symbol <" and having a width of 8 µm was formed in the ITO film by a known photolithographic technique, by using a photomask provided with a linear light shielding pattern having the shape of "symbol <" with a width of 9 µm at the center of the pixel in the longitudinal direction. The slit 18 is an opening pattern where an ITO film is not formed.

Next, a second transparent resin layer 8 was formed by a known photolithographic technique by using a photosensitive resin solution A and using a photomask having the pattern (openings) of the "symbol <" shape of the second transparent resin layer. The film thickness of the second transparent resin layer 8 was adjusted to 1.3 µm, and the second transparent resin layer was formed in the midsection of the pixel with a line width of 20 µm and at the center of the black matrix opening in the longitudinal direction.

Next, a pattern having the shape of "symbol <" was formed at a film thickness of 2.8 µm at each of the polygon-shaped openings of the black matrix 5 by a known photolithographic technique by using the red resist, green resist and blue resist used in Example 3.

Furthermore, a first transparent resin layer 7 having a film thickness of 0.7 µm was formed, and thus a color filter substrate was obtained.

### [Example 6]

In the present Example, a liquid crystal display device as illustrated in FIG. 6 was produced as follows.

As illustrated in FIG. 6, the color filter substrate 10 according to Example 5 and an array substrate 20 having an active element such as TFT formed thereon were sealed together, and a liquid crystal 17 having negative dielectric constant anisotropy was encapsulated therebetween. A polarizing plate (not shown in the diagram) was sealed to each of the two surfaces of the assembly, and thus a liquid crystal display device was obtained. On the sides where the color filter substrate 10 and the array substrate 20 were in contact with the liquid crystals 17, a vertically aligned film had been applied in advance to be formed. Meanwhile, in the array substrate 20 where an active element was formed, comb-shaped electrodes 1 and 2 in the form of "symbol <" as illustrated in FIG. 20B were formed.

In addition, the alignment film for vertical orientation is not shown in the diagram. A strict orientation treatment (for example, an orientation treatment in plural directions for forming plural domains, with the tilt angle being set to 89°) that is required in liquid crystal display devices of vertical orientation, such as MVA or VATN, was not carried out, and vertical orientation at almost 90° was achieved.

The first electrode 1 is electrically connected to the active element (TFT) of the array substrate 20. The second electrode and the third electrode served as common electrode at a common potential (common). In FIG. 6, the comb-shaped electrode 2c located below the black matrix 5 in a planar view is also a common electrode.

### [Example 7]

In the present Example, a pixel arrangement in which the pixel opening is parallelogram-shaped, as illustrated in FIG. 23A, FIG. 23B and FIG. 23C, will be described.

FIG. 23A illustrates an arrangement of color pixels of three colors, namely, R, G and B, and FIG. 23B and FIG. 23C illustrate the openings 25 of two kinds of pixels having different angles of inclination. The liquid crystals in these pixels are divided into one-half pixel units which respectively have different liquid crystal tilt directions 9. Furthermore, pixels with different inclinations of the parallelograms, for example, the directions in which four different liquid crystal tilt directions as shown in FIG. 23B and FIG. 23C, can be set, and thus, a liquid crystal display device having a wide viewing angle can be provided.

### [Example 8]

In the present Example, a liquid crystal display device illustrated in FIG. 12 was produced as follows.

As illustrated in FIG. 12, the color filter substrate 10 according to Example 3 and an array substrate 20 having an active element such as TFT formed thereon were sealed together, and a liquid crystal 17 having negative dielectric constant anisotropy was encapsulated between the two substrates. A polarizing plate was sealed to each of the two surfaces of the assembly, and thus a liquid crystal display device was obtained. On the surfaces of the color filter substrate 10 and the array substrate 20, a vertically aligned film had been applied in advance to be formed. Meanwhile, in the array substrate 20 where an active element was formed, comb-shaped electrodes 1 and 2 that were parallel to the long sides of the rectangular opening shown in FIG. 21B were formed.

The alignment film for vertical orientation is not shown in the diagram. A strict orientation treatment (for example, an orientation treatment in plural directions for forming plural domains, with the tilt angle being set to 89°) that is required in liquid crystal display devices of vertical orientation, such as MVA or VATN, was not carried out, and vertical orientation at almost 90° was achieved.

### [Example 9]

In the present Example, a liquid crystal display device illustrated in FIG. 13 was produced as follows.

On a transparent substrate 1a, a black matrix 5 was formed by using the same black matrix-forming resist 1 as that used in Example 1. On this transparent substrate 1a having a black matrix 5 formed thereon, a transparent conductive film 3 formed from ITO was formed by using a sputtering apparatus, and then a slit was formed in the ITO film by the same process as that used in Example 3. This served as a third electrode.

Subsequently, a red pixel 15, a green pixel 14, a blue pixel 16, and a first transparent resin layer 7 were formed in the same manner as in Example 3, and thus a color filter substrate 10 was obtained. Meanwhile, for the green composition and the blue composition, the same color resists as those used in Example 3 were used, but for the formation of the red pixel 15, a red composition 3 such as described below was used. The film thickness of each of the color layers was set to 2.5 µm.

### [Preparation of red pigment 3]

A mixture of the composition described below was uniformly stirred and mixed, and then the mixture was dispersed with a sand mill for 5 hours by using glass beads having a diameter of 1 mm. Subsequently, the dispersion was filtered through a filter having a pore size of 5 µm, and thus a dispersion of a red pigment 3 was produced.

| | |
|---|---|
| Red pigment: C.I. Pigment Red 254 | 8 parts |
| ("IRGA FOR RED B-CF" manufactured by Ciba Specialty Chemicals Corp.) | |
| Red pigment: C.I. Pigment Red 177 | 12 parts |
| ("CHROMOPHTAL RED A2B" manufactured by Ciba Specialty Chemicals Corp.) | |
| Dispersant ("AJISPER-PB821" manufactured by Ajinomoto Fine-Techno Co., Inc.) | 2 parts |
| Acrylic varnish (solids content: 20% by mass) | 108 parts |

### [Preparation of red composition 3]

Thereafter, a mixture of the composition described below was stirred and mixed so as to be uniform, and then the mixture was filtered through a filter having a pore size of 5 µm. Thus, a red composition was obtained.

| | |
|---|---|
| Red pigment | 3 45 parts |
| Acrylic resin solution | 18 parts |
| Dipentaerythritol penta- and hexa-acrylate ("M-402" manufactured by Toagosei Co., Ltd.) | 4.5 parts |
| Photopolymerization initiator | 1.2 parts |
| ("IRGACURE 907" manufactured by Ciba Specialty Chemicals Corp.) | |
| Sensitizer ("EAB-F" manufactured by Hodogaya Chemical Co., Ltd.) | 2.0 parts |
| Cyclohexanone | 32.3 parts |

As shown in the following Table 3, the magnitudes of relative permittivity of the respective color layers were in a relation of red pixel > green pixel > blue pixel.

**Table 3**

| | | Example 9 | | |
|---|---|---|---|---|
| | Measurement frequency | Red layer (R) | Green layer (G) | Blue layer (B) |
| Relative permittivity | 120 Hz | 3.7 | 3.5 | 3.1 |
| | 240 Hz | 3.6 | 3.4 | 3.0 |
| | 480 Hz | 3.6 | 3.4 | 3.0 |

The color filter substrate 10 and the array substrate 20 having the same configuration as that of Example 8 were sealed in the form of a liquid crystal having negative dielectric constant anisotropy being interposed therebetween, and a polarizing plate and a retardation plate were attached thereto. Thus, a liquid crystal display device was obtained. On the surfaces of the color filter substrate and the array substrate, a vertically aligned film had been applied in advance.

This liquid crystal display device was driven, and the pixels of the various colors exhibited almost the same rise at the same driving voltage. Thus, a satisfactory display that was homogeneous could be obtained.

### [Example 10]

In the present Example, a liquid crystal display device illustrated in FIG. 18 was produced.

As illustrated in FIG. 18 or FIG. 19, a color filter substrate 60 and an array substrate 50 having an active element such as a TFT formed thereon were sealed together, and a liquid crystal 17 having negative dielectric constant anisotropy was encapsulated between the two substrates. A polarizing plate was further attached on each of the two faces, and thus a liquid crystal display device was obtained. On the surfaces of the color filter substrate and the array substrate, a vertically aligned film had been applied and formed in advance. The array substrate 60 was arranged such that an array substrate with the same openings and comb-shaped electrodes as those used in Example 6 was used.

Regarding the color filter substrate 60, a product obtained by further forming a linear conductor 4 as a transparent conductive film on the color filter substrate of Example 4 was used. The linear conductor 4 had an image line width of 6 µm, and a spacing width of 8 µm. The third electrode 3, linear conductor 4 and second electrode 2 were all used as common electrodes.

Meanwhile, since the linear conductor 4 was formed, from the viewpoint of liquid crystal driving, the slit 18 shown in FIG. 18 or FIG. 19 may not be formed.

### [Example 11]

In the present Example, a liquid crystal display device illustrated in FIG. 11 was produced as follows.

Regarding the color filter substrate 10, the same color filter substrate as that used in Example 5 was used.

The array substrate 30 includes a light reflective film 21 formed from an aluminum alloy thin film at the same position in a planar view as that of the second transparent resin layer 8. The reflective film 21 is electrically independent, and no voltage is applied thereto.

The color layer on the second transparent resin layer 8 is formed thinly, and the light transmittance at the reflection region illustrated in FIG. 11 is higher than the transmittance at the transmission region. That is, regions having two different transmittances, which are partitioned into a reflection region and a transmittance region, are included on the color filter substrate.

As illustrated in FIG. 11, at the time of applying a driving voltage to the liquid crystals, the liquid crystals 28 in the reflection region have an angle of inclination different from that of the liquid crystals in the transmission region. A reflective display can be achieved by adjusting the retardation of the liquid crystals 28 in the reflection region to approximately a half of the retardation of the transmission region. Furthermore, there is no height difference in a section view between the reflection region and the transmission region in the present Example, and a decrease in the display characteristics caused by a height difference (for example, light leakage) does not occur. The liquid crystal display device illustrated in FIG. 11 can be used as a transflective liquid crystal display device.

When it is said that there is no height difference between the reflection region and the transmission region in a section view, it implies that the reflection region and the transmission region are flattened with a film thickness difference of ±0.3 µm or less. Furthermore, for example, it is desirable that the surface within one pixel opening be flattened with a film thickness difference of ±0.135 µm or less, which corresponds to λ/4 of the wavelength of green, 535 nm.

### [Example 12]

In the present Example, a liquid crystal display device illustrated in FIG. 24 was produced as follows.

The liquid crystal display device according to the present Example is a transflective liquid crystal display device using a reflective polarizing plate. Regarding the reflective polarizing plate, for example, a reflective polarizing plate described in Japanese Patent No. 4177398 can be used.

The color filter substrate 10 used in the present Example is, for example, the color filter substrate of Example 4 illustrated in FIG. 4. The array substrate 20 having an active element (TFT) formed thereon was prepared as, for example, an array substrate having comb-shaped electrodes as illustrated in FIG. 22.

A color filter substrate 10 and an array substrate 20 were disposed to face each other, and the two substrates were sealed together, with a liquid crystal 17 having negative dielectric constant anisotropy being interposed therebetween. On the side of the color filter substrate 10 opposite to the liquid crystal 17, an optical compensation layer 31a and a polarizing plate 32a are disposed. Furthermore, on the side of the array substrate 20 opposite to the liquid crystal 17, a polarizing plate 32b, a light diffusion layer 33a, a reflective polarizing plate 34, an optical compensation layer 31b, a prism sheet 35, a light diffusion layer 33b, a light guide plate 36, and a light reflective plate 37 are provided in sequence. The light guide plate 36 is provided with a light source, for example, an LED light source 38.

The LED light source 38 is preferably an RGB individual light emitting element, but a pseudo-white LED may also be used. Also, instead of an LED< a cold cathode ray tube or a fluorescent lamp that are conventionally used for general purposes may also be used. When an RGB individual light emitting element is employed as the LED light source 38, since the respective luminescence intensities can be adjusted individually for the various colors, an optical color display can be achieved. Furthermore, the liquid crystal display device can also be applied to a stereoscopic image display or to the control of the viewing angle. The technique of local dimming, which is a technology of adjusting the brightness of the backlight by controlling the area of the display screen and enhancing the contrast, can be easily applied to LED light sources, and as an normal display region and a dynamic display region according to the present invention are used in combination, an enhancement of image quality that has never been observed can be obtained. In the technique of local dimming, not the edge light system as shown in FIG. 24, but a near-source type backlight system in which the LED light source for RGB individual light emission is disposed on the back surface of the liquid crystal display device, can achieve a high image quality display with a finer area control.

According to the embodiments of the present invention described above, a color filter substrate for a liquid crystal display device in which a balance is achieved between a gradation display and an improvement in responsiveness, and a liquid crystal display device equipped with this color filter substrate are provided. Particularly, a liquid crystal display device having a high transmittance which has solved the problem of disclination can be provided. According to an embodiment of the present invention, a color filter substrate for a liquid crystal display device which does not destroy the color balance and enables a display with a dynamic feeling by particularly emphasizing brightness, without increasing the number of TFT elements, and a liquid crystal display device equipped with this color filter substrate can be provided.

Furthermore, according to an embodiment of the present invention, there is provided a liquid crystal display device which enables a reflective display with a satisfactory color balance, without exhibiting a yellow tinge, even when applied to a transflective or reflective type liquid crystal display.

Also, according to an embodiment of the present embodiment, since a dynamic bright display can be obtained without increasing the number of pixels such as white pixels or yellow pixels, there is provided a liquid crystal display device in which there are no dead pixels as in the case of white pixels occurring at the time of conventional gradation display, the problem of disclination that decreases the transmittance of the liquid crystals is solved, and a brighter display than conventional displays is enabled.

Furthermore, since a configuration can be adopted in which a transparent conductive film is laminated so as to cover the effective display pixels of the color filter, a liquid crystal display device which, as a side effect, is not easily affected by an external electric field, unlike an IPS (liquid crystals are driven in a lateral electric field) system or an FFS (liquid crystals are driven in an electric field that is generated in the fringe of a comb-shaped electrode), can be provided.

In addition, the rectangular pixel of the liquid crystal display device according to an embodiment can be partitioned into 1/2 pixels or 1/4 pixels by axial symmetry or point symmetric with respect to the pixel center at the first transparent resin layer. However, when a driving system is adopted in which two or four TFT elements are formed in one pixel and different voltages are applied to different TFT elements, adjustment of the viewing angle or a stereoscopic image display can be achieved.

This application is a divisional application of European patent application no. 11 849 013.5 (the "parent application"), also published as EP 2 653 912. Based on the original claims of the parent application, the following aspects form part of the content of this divisional application as filed.
1. A color filter substrate for an oblique electric field liquid crystal display device, the color filter substrate characterized by comprising:
   a transparent substrate;
   a black matrix that is formed above the transparent substrate and comprises openings having a polygonal shape in which opposite sides are parallel to each other;
   a transparent conducive film that is provided above the black matrix and the transparent substrate within the openings;
   color pixels of plural colors each having a polygonal shape in which opposite sides are parallel to each other, each of the color pixels being provided above the transparent conductive film and comprising, within each of the openings, a region that is partitioned into two regions respectively having different transmittances; and
   a first transparent resin layer that is provided so as to cover the color pixels.
2. A color filter substrate for an oblique electric field liquid crystal display device, the color filter substrate characterized by comprising:
   a transparent substrate;
   a transparent conductive film that is formed above the transparent substrate;
   a black matrix that is provided above the transparent conductive film and comprises openings having a polygonal shape in which opposite sides are parallel to each other;
   color pixels of plural colors each having a polygonal shape in which opposite sides are parallel to each other, each of the color pixels being provided above the black matrix and above the transparent conductive film within the openings and comprising, within each of the openings, a region that is partitioned into two regions respectively having different transmittances; and
   a first transparent resin layer that is provided so as to cover the color pixels,
   wherein the black matrix is formed of a material having a higher relative permittivity than relative permittivities of the color pixels.
3. The color filter substrate for the oblique electric field liquid crystal display device according to aspect 1, characterized in that the two regions respectively having different transmittances are partitioned into a region of a thin color layer which covers a stripe-shaped second transparent resin layer that passes through a central area of the opening; and a region of the color layer other than that, above the transparent conductive film within the opening.
4. The color filter substrate for the oblique electric field liquid crystal display device according to aspect 3, characterized in that the second transparent resin layer passes through a center of the opening having the polygonal shape and is disposed in parallel to one side of the polygonal shape.
5. The color filter substrate for the oblique electric field liquid crystal display device according to aspect 4, characterized in that a relative permittivity of the second transparent resin layer is lower than relative permittivities of the color layers.
6. The color filter substrate for the oblique electric field liquid crystal display device according to aspect 1, characterized in that the transparent conductive film passes through a center of the opening having the polygonal shape and has a linear slit that is parallel to one side of the polygonal shape.
7. A color filter substrate for an oblique electric field liquid crystal display device, the color filter substrate characterized by comprising:
   a transparent substrate;
   a transparent conductive film that is formed above the transparent substrate;
   a black matrix that is provided above the transparent conductive film and comprises openings having a polygonal shape in which opposite sides are parallel to each other; and
   color pixels of plural colors each having a polygonal shape in which opposite sides are parallel to each other, each of the color pixels being provided above the black matrix and above the transparent conductive film within each of the openings,
      wherein the transparent conductive film has, at a central area of each of the openings, a linear slit that is parallel to a side in a longitudinal direction of the opening.
8. A color filter substrate for an electric field liquid crystal display device, the color filter substrate characterized by comprising:
   a transparent substrate;
   a black matrix that is formed above the transparent substrate and comprises openings having a polygonal shape in which opposite sides are parallel to each other;
   a transparent conductive film that is provided above the black matrix and above the transparent substrate within the openings; and
   color pixels of plural colors each having a polygonal shape in which opposite sides are parallel to each other, the color pixels being provided above the transparent conductive film,
   wherein the transparent conductive film has, at a central area of each of the openings, a linear slit that is parallel to a side in a longitudinal direction of the opening.
9. The color filter substrate for the oblique electric field liquid crystal display device according to aspect 1, characterized in that the opening having the polygonal shape has a rectangular shape in a planar view.
10. The color filter substrate for the oblique electric field liquid crystal display device according to aspect 1, characterized in that the opening having the polygonal shape has a quadrilateral shape having long sides and short sides, and is folded in a form of the "symbol <" in a planar view near a center in a direction of the long side.
11. The color filter substrate for the oblique electric field liquid crystal display device according to aspect 1, characterized in that the opening having the polygonal shape has a parallelogram shape in a planar view, and respective one-halves of the number of color pixels of same color have parallelogram shapes with two kinds of different angles of inclination.
12. The color filter substrate for the oblique electric field liquid crystal display device according to aspect 1, characterized in that the color pixels of plural colors comprise color pixels of three colors of red pixels, green pixels and blue pixels, and respective relative permittivities of the color pixels measured at a frequency for driving liquid crystals are in a range of from 2.9 to 4.4, while the relative permittivity of each of the color pixels is in a range of ±0.3 with respect to an average relative permittivity of the red pixels, green pixels and blue pixels.
13. The color filter substrate for the oblique electric field liquid crystal display device according to aspect 1, characterized in that the color pixels of plural colors comprise color pixels of three colors of red pixels, green pixels and blue pixels, and magnitudes of respective relative permittivities of the color pixels measured at a frequency for driving liquid crystals are in a relation of red pixel > green pixel > blue pixel.
14. The color filter substrate for the oblique electric field liquid crystal display device according to aspect 13, characterized in that a primary coloring agent for the green pixels is a halogenated zinc phthalocyanine pigment.
15. An oblique electric field liquid crystal display device, characterized by comprising:
   the color filter substrate according to aspect 1;
   an array substrate disposed to face the color filter substrate, the array substrate having elements for driving liquid crystals arranged in a matrix form; and
   a liquid crystal layer interposed between the color filter substrate and the array substrate,
   wherein the array substrate comprises a first electrode and a second electrode, to which different potentials are applied in order to drive liquid crystals, correspondingly in each of the color pixels of the color filter substrate in a planar view.
16. The oblique electric field liquid crystal display device according to aspect 15, characterized in that when a driving voltage is applied between the first electrode, and the second electrode and a third electrode which is the transparent conductive film, liquid crystal molecules in a region of liquid crystals corresponding to the opening move so as to tilt in opposite directions that are axially symmetric with respect to a straight line which passes through a center of the opening and bisects the opening in a planar view.
17. The oblique electric field liquid crystal display device according to aspect 15, characterized in that in a region of liquid crystals corresponding to the opening, directions in which liquid crystal molecules would tilt when a voltage for driving the liquid crystals is applied, are partitioned into four different regions with respect to a center of the opening in a planar view.
18. The oblique electric field liquid crystal display device according to aspect 15, characterized in that the first electrode has a comb-shaped pattern that is connected to an active element for driving the liquid crystals, the second electrode has a comb-shaped pattern provided below the first electrode across an insulating layer, and the second electrode protrudes from an end of the first electrode in a direction that becomes distant from a center that bisects the opening in a planar view.
19. The oblique electric field liquid crystal display device according to aspect 15, characterized in that the first electrode is not provided above the array substrate at a position in a planar view where the second transparent resin layer is provided.
20. The oblique electric field liquid crystal display device according to aspect 15, characterized in that a light reflective film is provided above the array substrate at a position in a planar view where the second transparent resin layer is provided.
21. An oblique electric field liquid crystal display device, characterized by comprising:
   a color filter substrate comprising a transparent substrate, a black matrix that is formed above the transparent substrate and comprises openings having a polygonal shape in which opposite sides are parallel to each other, a transparent conductive film that is provided above the black matrix and above the transparent substrate within the openings, and color pixels of plural colors that are formed above the transparent conductive film and each have a polygonal shape in which opposite sides are parallel to each other, with the transparent conductive film having, at a center of each of the openings, a linear slit that is parallel to a side in a longitudinal direction of the opening;
   an array substrate that is disposed to face the color filter substrate and comprises a first electrode having a comb-shaped pattern that is connected to an active element for driving liquid crystals, and a second electrode having a comb-shaped pattern that is provided with an insulating layer interposed between the first electrode and the second electrode, and protrudes from an end of the first electrode in a direction that becomes distant from a center that bisects the opening in a planar view; and
   a liquid crystal layer that is interposed between the color filter substrate and the array substrate.
22. An oblique electric field liquid crystal display device, characterized by comprising:
   a color filter substrate comprising a transparent substrate, a transparent conductive film formed above the transparent substrate, a black matrix that is formed above the transparent conductive film and comprises openings having a polygonal shape in which opposite sides are parallel to each other, and color pixels of plural colors that are formed above the black matrix and above the transparent conductive film within the openings and each have a polygonal shape in which opposite sides are parallel to each other, with the transparent conductive film having, at a center of each of the openings, a linear slit that is parallel to a side in a longitudinal direction of the opening;
   an array substrate that is disposed to face the color filter substrate and comprises a first electrode having a comb-shaped pattern that is connected to an active element for driving liquid crystals, and a second electrode having a comb-shaped pattern that is provided with an insulating layer interposed between the first electrode and the second electrode, and protrudes from an end of the first electrode in a direction that becomes distant from a center that bisects the opening in a planar view; and
   a liquid crystal layer that is interposed between the color filter substrate and the array substrate.
23. An oblique electric field liquid crystal display device, characterized by comprising:
   an array substrate comprising a first electrode having a comb-shaped pattern that is connected to an active element for driving liquid crystals, and a second electrode having a comb-shaped pattern that is provided with an insulating layer interposed between the first electrode and the second electrode, and protrudes from an end of the first electrode in a direction that becomes distant from a center that bisects the opening in a planar view;
   a color filter substrate that is disposed to face the array substrate and comprises a transparent substrate, a transparent conductive film formed above the transparent substrate, a black matrix that is formed above the transparent conductive film and comprises openings having a polygonal shape in which opposite sides are parallel to each other, color pixels of plural colors that are formed above the black matrix and above the transparent conductive film within the openings and each have a polygonal shape in which opposite sides are parallel to each other, a first transparent resin layer provided so as to cover the color pixels, and a set of linear conductors formed from a transparent conductive film, the linear conductors being disposed above the first transparent resin layer and being disposed symmetrically with respect to a center of the pixel and in parallel to the comb-shaped pattern of the second electrode on an inner side of the second electrode that is closest to a pixel center in a planar view; and
   a liquid crystal layer that is interposed between the array substrate and the color substrate.
24. An oblique electric field liquid crystal display device characterized by comprising a reflection region and a transmission region,
   the liquid crystal display device comprising:
   an array substrate comprising a first electrode having a comb-shaped pattern that is connected to an active element for driving liquid crystals, a second electrode having a comb-shaped pattern that is provided with an insulating layer interposed between the first electrode and the second electrode, and protrudes from an end of the first electrode in a direction that becomes distant from a center that bisects the opening in a planar view, and a light reflective film in the reflection region;
   a color filter substrate comprising a transparent substrate, a transparent conductive film formed above the transparent substrate, a second transparent resin layer that is provided above the transparent conductive film and provided in the reflection region in a planar view, color pixels of plural colors that are provided above the transparent conductive film and each have a polygonal shape in which opposite sides are parallel to each other, and a first transparent resin layer that is provided so as to cover the color pixels, wherein there is no height difference in a section view between the reflection region and the transmission region within the opening; and
   a liquid crystal layer that is interposed between the array substrate and the color filter substrate.
25. The oblique electric field liquid crystal display device according to aspect 21, characterized in that the first electrode and the second electrode are formed from a conductive metal oxide that is transparent to a visible light region.
26. The oblique electric field liquid crystal display device according to aspect 21, characterized in that the liquid crystals have negative dielectric constant anisotropy.

## Claims

1. A color filter substrate for an oblique electric field liquid crystal display device, the color filter substrate **characterized by** comprising:
a transparent substrate;
a transparent conductive film that is formed above the transparent substrate;
a black matrix that is provided above the transparent conductive film and comprises openings having a polygonal shape in which opposite sides are parallel to each other;
color pixels of plural colors each having a polygonal shape in which opposite sides are parallel to each other, each of the color pixels being provided above the black matrix and above the transparent conductive film within the openings and comprising, within each of the openings, a region that is partitioned into two regions respectively having different transmittances; and
a first transparent resin layer that is provided so as to cover the color pixels,
wherein the black matrix is formed of a material having a higher relative permittivity than relative permittivities of the color pixels.

2. The color filter substrate for the oblique electric field liquid crystal display device according to claim 1, **characterized in that** the two regions respectively having different transmittances are partitioned into a region of a thin color layer which covers a stripe-shaped second transparent resin layer that passes through a central area of the opening; and a region of the color layer other than that, above the transparent conductive film within the opening.

3. The color filter substrate for the oblique electric field liquid crystal display device according to claim 2, **characterized in that** the second transparent resin layer passes through a center of the opening having the polygonal shape and is disposed in parallel to one side of the polygonal shape.

4. The color filter substrate for the oblique electric field liquid crystal display device according to claim 3, **characterized in that** a relative permittivity of the second transparent resin layer is lower than relative permittivities of the color layers.

5. The color filter substrate for the oblique electric field liquid crystal display device according to claim 1, **characterized in that** the transparent conductive film passes through a center of the opening having the polygonal shape and has a linear slit that is parallel to one side of the polygonal shape.

6. The color filter substrate for the oblique electric field liquid crystal display device according to claim 1, **characterized in that** the opening having the polygonal shape has a rectangular shape in a planar view.

7. The color filter substrate for the oblique electric field liquid crystal display device according to claim 1, **characterized in that** the opening having the polygonal shape has a quadrilateral shape having long sides and short sides, and is folded in a form of the "symbol <" in a planar view near a center in a direction of the long side.

8. The color filter substrate for the oblique electric field liquid crystal display device according to claim 1, **characterized in that** the opening having the polygonal shape has a parallelogram shape in a planar view, and respective one-halves of the number of color pixels of same color have parallelogram shapes with two kinds of different angles of inclination.

9. The color filter substrate for the oblique electric field liquid crystal display device according to claim 1, **characterized in that** the color pixels of plural colors comprise color pixels of three colors of red pixels, green pixels and blue pixels, and respective relative permittivities of the color pixels measured at a frequency for driving liquid crystals are in a range of from 2.9 to 4.4, while the relative permittivity of each of the color pixels is in a range of ±0.3 with respect to an average relative permittivity of the red pixels, green pixels and blue pixels.

10. The color filter substrate for the oblique electric field liquid crystal display device according to claim 1, **characterized in that** the color pixels of plural colors comprise color pixels of three colors of red pixels, green pixels and blue pixels, and magnitudes of respective relative permittivities of the color pixels measured at a frequency for driving liquid crystals are in a relation of red pixel > green pixel > blue pixel.

11. The color filter substrate for the oblique electric field liquid crystal display device according to claim 10, **characterized in that** a primary coloring agent for the green pixels is a halogenated zinc phthalocyanine pigment.

12. An oblique electric field liquid crystal display device, **characterized by** comprising:
the color filter substrate according to claim 1;
an array substrate disposed to face the color filter substrate, the array substrate having elements for driving liquid crystals arranged in a matrix form; and
a liquid crystal layer interposed between the color filter substrate and the array substrate and including the liquid crystals having negative dielectric constant anisotropy,
wherein the array substrate comprises a first electrode and a second electrode, to which different potentials are applied in order to drive liquid crystals, correspondingly in each of the color pixels of the color filter substrate in a planar view.

13. The oblique electric field liquid crystal display device according to claim 12, **characterized in that** when a driving voltage is applied between the first electrode, and the second electrode and a third electrode which is the transparent conductive film, liquid crystal molecules in a region of liquid crystals corresponding to the opening move so as to tilt in opposite directions that are axially symmetric with respect to a straight line which passes through a center of the opening and bisects the opening in a planar view.

14. The oblique electric field liquid crystal display device according to claim 12, **characterized in that** in a region of liquid crystals corresponding to the opening, directions in which liquid crystal molecules would tilt when a voltage for driving the liquid crystals is applied, are partitioned into four different regions with respect to a center of the opening in a planar view.

15. The oblique electric field liquid crystal display device according to claim 12, **characterized in that** the first electrode has a comb-shaped pattern that is connected to an active element for driving the liquid crystals, the second electrode has a comb-shaped pattern provided below the first electrode across an insulating layer, and the second electrode protrudes from an end of the first electrode in a direction that becomes distant from a center that bisects the opening in a planar view.

16. The oblique electric field liquid crystal display device according to claim 12, **characterized in that** the first electrode is not provided above the array substrate at a position in a planar view where the second transparent resin layer is provided.

17. The oblique electric field liquid crystal display device according to claim 12, **characterized in that** a light reflective film is provided above the array substrate at a position in a planar view where the second transparent resin layer is provided.
